(19) Europäisches Patentamt
European Patent Office
Office européen des brevets

(11) **EP 1 969 748 B1**

(12) **FASCICULE DE BREVET EUROPEEN**

(45) Date de publication et mention
de la délivrance du brevet:
**20.10.2010 Bulletin 2010/42**

(51) Int Cl.:
***H04J 14/08*** *(2006.01)*  ***H04J 14/02*** *(2006.01)*
***H04J 7/00*** *(2006.01)*

(21) Numéro de dépôt: **06847194.5**

(22) Date de dépôt: **20.12.2006**

(86) Numéro de dépôt international:
**PCT/FR2006/051404**

(87) Numéro de publication internationale:
**WO 2007/074297 (05.07.2007 Gazette 2007/27)**

(54) **TRANSMISSION OPTIQUE ENTRE UN TERMINAL CENTRAL ET UNE PLURALITE DE TERMINAUX CLIENTS VIA UN RESEAU OPTIQUE**

OPTISCHE ÜBERTRAGUNG ZWISCHEN EINEM ZENTRALEN ENDGERÄT UND MEHREREN CLIENT-ENDGERÄTEN ÜBER EIN OPTISCHES NETZWERK

OPTICAL TRANSMISSION BETWEEN A CENTRAL TERMINAL AND A PLURALITY OF CLIENT TERMINALS VIA AN OPTICAL NETWORK

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.12.2005 FR 0513015**

(43) Date de publication de la demande:
**17.09.2008 Bulletin 2008/38**

(73) Titulaire: **FRANCE TELECOM**
**75015 Paris (FR)**

(72) Inventeurs:
• **PINCEMIN, Erwan**
  **F-22290 Gommenec'h (FR)**
• **PAYOUX, Franck**
  **F-22300 Lannion (FR)**

(74) Mandataire: **Joly, Jean-Jacques et al**
**Cabinet Beau de Loménie**
**158, rue de l'Université**
**75340 Paris cedex 07 (FR)**

(56) Documents cités:
**WO-A-03/090392     US-A1- 2003 231 885**

• **JUNG D K ET AL: "Spectrum-sliced bidirectional passive optical network for simultaneous transmission of WDM and digital broadcast video signals" ELECTRONICS LETTERS, IEE STEVENAGE, GB, vol. 37, no. 5, 1 mars 2001 (2001-03-01), pages 308-309, XP006016334 ISSN: 0013-5194**

EP 1 969 748 B1

**Description**

Domaine technique de l'invention

L'invention se situe dans le domaine des réseaux d'accès optiques passifs de type PON « Passive Optical Network ». L'invention concerne plus particulièrement les systèmes de transmission optique à très haut débits entre un terminal central et une pluralité de terminaux clients via un réseau d'accès optique passif.

Arrière-plan de l'invention

Actuellement, les réseaux d'accès des opérateurs de télécommunications utilisent majoritairement l'accès filaire portant des technologies comme l'ADSL (« Asymetric Digital Subscriber Line »). L'optique est très peu utilisée dans les réseaux d'accès actuels, car le coût des infrastructures engendré notamment par l'installation de fibres optiques entre les centraux et les abonnés est encore prohibitif.

Toutefois, l'utilisation de l'optique dans des réseaux d'accès basés sur des architectures, de type PON permet la réalisation d'un bond significatif en termes de capacité, impossible à atteindre par les technologies d'accès filaire et néanmoins inéluctable en raison de la montée en débit des services à destination de l'abonné.

D'une manière générale, les réseaux d'accès de type PON peuvent être de deux types, les PONs dits classiques et les PONs par multiplexage en longueurs d'onde dits PONs WDM (« Wavelength Division Multiplexing »).

Les PONs classiques utilisent un accès multiple temporel de type TDMA (« Time Division Multiple Access ») et ne nécessitent qu'un seul émetteur au niveau du central de transmission. Ils se basent sur l'implémentation de coupleurs optiques 1xN (N étant un nombre de clients ou d'abonnés) afin de distribuer l'intégralité du flux de données multiplexées temporellement vers les N clients. Dans ce cas, l'information portée par un signal émis par le central de transmission est envoyée à tous les abonnés et des terminaux spécifiques, disposés chez chacun d'entre eux, permettent alors d'extraire l'information destinée réellement à ce dernier. Ainsi, les données, véhiculées à partir du central de transmission par une longueur d'onde unique, sont démultiplexées temporellement au niveau de chaque terminal client placé chez l'abonné.

Cependant, le terminal client est complexe et l'atténuation du signal par un coupleur 1xN est non négligeable. De plus, le fait que l'information est extraite au niveau de chaque terminal client présente un souci de sécurité.

Les PONs WDM, quant à eux, utilisent une répartition des ressources en longueurs d'onde. Autrement dit, à chaque client est alloué une longueur d'onde spécifique. En effet, une longueur d'onde est affectée à chaque abonné au niveau du central de transmission. Chaque longueur d'onde est ensuite filtrée au niveau d'un démultiplexeur optique et est envoyée vers l'abonné correspondant. Ce type de réseau nécessite donc l'utilisation d'un multiplex de longueurs d'onde, en quantité égale au nombre d'abonnés, et d'un démultiplexeur.

Ainsi, le réseau de type PON WDM a l'avantage, par rapport au réseau PON classique, de la simplicité, chaque longueur d'onde étant affectée à un abonné spécifique, et de la performance, un démultiplexeur optique étant nettement moins atténuant qu'un coupleur 1xN.

En revanche, il est plus coûteux car il utilise un plus grand nombre de longueurs d'onde et un élément de routage (démultiplexeur optique) plus onéreux que le simple coupleur 1xN.

Il est aussi connu un central comportant un laser accordable émettant, par commutation, une pluralité de longueurs d'ondes différentes. Ainsi, il adresse les clients l'un après l'autre en accordant sa longueur d'onde. Cependant, le laser accordable doit fonctionner à un débit N fois supérieur à celui alloué aux clients, et il faut ajouter un temps de commutation qui, dans le meilleur des cas, est de 50 ns qui est loin d'être négligeable dans des communications à très haut débit.

Les publications US 2003/231885, WO03/090392 et "Spectrum-sliced bidirectional passive optical network for simultaneous transmission of WDM and digital broadcast video signals" par Jung D K et al, 2001 montrent des états de la technique pertinents.

Objet et resumé de l'invention

L'invention a pour but de remédier à ces inconvénients, et de simplifier la transmission optique entre un terminal central et une pluralité de terminaux clients.

Ces buts sont atteints grâce à un procédé de transmission optique entre un terminal central et une pluralité de terminaux clients via un réseau optique, dans lequel des données descendantes $D_1$, $D_2$ sont transmises du terminal central vers la pluralité de terminaux client, lors d'une phase de transmission descendante.

Selon la présente invention, la phase de transmission descendante comprend les étapes suivantes :

- émission par le terminal central d'un signal lumineux descendant de longueur d'onde unique doublement multiplexé en amplitude et dans le temps et portant les données descendantes $D_1$, $D_2$ destinées à être reçues par la pluralité de terminaux clients, le signal lumineux descendant de longueur d'onde unique étant constitué d'impulsions de type soliton comportant une pluralité d'amplitudes $A_1$, $A_2$;

- transformation par un effet non linéaire de piégeage solitonique de la longueur d'onde unique $\lambda_0$ du signal lumineux descendant en une pluralité de longueurs d'onde $\lambda_1$, $\lambda_2$ en fonction de la pluralité d'amplitudes $A_1$, $A_2$ de manière à former un signal lumineux descendant $S_f$ multiplexé en longueurs d'onde ;
- routage du signal lumineux descendant $S_f$ multiplexé en longueurs d'ondes vers la pluralité de terminaux clients;
- démultiplexage en longueurs d'onde du signal lumineux descendant $S_f$ multiplexé en longueurs d'onde, de sorte que chaque terminal client reçoit les données qui lui sont destinées $D_1$, $D_2$ selon une longueur d'onde spécifique $\lambda_1$, $\lambda_2$.

Selon un aspect de l'invention, des données montantes $D'_1$, $D'_2$ sont transmises de la pluralité de terminaux clients vers un terminal central, lors d'une phase de transmission montante. Dans ce cas, les étapes de transformation et de routage mentionnées ci-dessus sont réalisées par le terminal central.

Ainsi, l'effet de piégeage solitonique, lors de l'étape de transformation, permet de convertir un signal lumineux, de longueur d'onde unique, doublement multiplexé en amplitude et dans le temps émis par le terminal central, en un signal lumineux multiplexé en longueurs d'onde comportant une pluralité de longueurs d'onde, de telle sorte que chacune de ces longueurs d'onde porte les données propres à chaque terminal client. Cette transformation est particulièrement bien adaptée à la conversion de signaux optiques à très hauts débits. Le terme « très hauts débits » désignera par la suite des débits de l'ordre de 40 à 160 Gbits/s.

Le procédé selon l'invention permet ainsi de diminuer les coûts d'un réseau de transmission optique de type PON (par rapport aux réseaux de type PON WDM actuels), tout en augmentant la performance notamment en termes débits de transmission, la sécurité et la simplicité du réseau de transmission.

Selon un aspect et réalisation, la phase de transmission montante du procédé de transmission optique selon l'invention comprend les étapes suivantes :

- émission d'une pluralité de signaux lumineux montants $S'_1$, $S'_2$ vers le terminal central, chaque signal lumineux montant portant respectivement les données montantes $D'_1$. $D'_2$ à une longueur d'onde distincte $\lambda'_1$, $\lambda'_2$ et étant respectivement émis par un terminal client de la pluralité de terminaux clients selon une amplitude $A'_1$, $A'_2$ spécifique et avec un décalage temporel $t'_1$, $t'_2$ prédéterminé;
- multiplexage en longueurs d'onde de la pluralité de signaux lumineux montants $S'_1$, $S'_2$, de manière à former un signal lumineux montant $S'_f$ multiplexé en longueurs d'ondes ; et
- routage du signal lumineux montant $S'_f$ multiplexé en longueurs d'ondes vers au moins un récepteurs destiné à obtenir les données $D'_1$, $D'_2$ émises par chaque terminal client de la pluralité de terminaux clients.

Selon un premier mode de réalisation de l'invention, la phase de transmission montante comprend en outre :

- une étape de démultiplexage en longueurs d'ondes, lors de laquelle le signal lumineux montant $S'_f$ multiplexé en longueurs d'ondes est spectralement démultiplexé en une pluralité de composantes spectrales ; et
- une étape de réception des données montantes par une pluralité de récepteurs, lors de laquelle chacune des composantes spectrales portant les données montantes émises par un terminal client sur une longueur d'onde respective est reçue par un récepteur de la pluralité de récepteurs.

Selon un deuxième mode de réalisation, la phase de transmission montante du procédé de transmission optique selon l'invention comprend en outre :

- une étape de transformation, lors de laquelle le signal lumineux montant $S'_f$ multiplexé en longueur d'onde est converti par un effet non linéaire de piégeage solitonique en un signal montant de longueur d'onde unique $\lambda'_0$ multiplexé dans le temps portant les données montantes ; et
- une étape de réception du signal montant de longueur d'onde unique $\lambda'_0$ par un récepteur unique.

Le procédé selon l'invention permet de réaliser simultanément la conversion par effet de piégeage solitonique d'un signal OTDM (émis par le terminal central) en un signal WDM (destiné à la pluralité de terminaux clients) et réciproquement la conversion d'un signal WDM (issu de la pluralité de terminaux clients) en un signal OTDM (destiné au terminal central). Le procédé selon l'invention permet ainsi d'allier les avantages d'un mode de transmission TDM aux avantages d'un mode de transmission WDM.

De manière avantageuse, les données montantes $D'_1$, $D'_2$ sont récupérées à l'aide d'un unique récepteur au niveau du terminal central, permettant ainsi de minimiser l'encombrement du terminal central.

Selon une caractéristique de l'invention, le procédé selon l'invention comprend, préalablement à l'étape de transformation, une étape de compression temporelle des impulsions de type soliton.

Une telle étape de compression des impulsions soliton dans le domaine temporel a pour effet d'augmenter la puissance crête de ces impulsions, améliorant ainsi l'excitation par l'effet non linéaire de piégeage solitonique.

Selon une autre caractéristique de l'invention, lors de la phase de transmission descendante du procédé de transmission optique selon l'invention, l'étape de transformation par effet non linéaire de piégeage solitonique est réalisée en injectant le signal lumineux descendant S de longueur d'onde unique $\lambda_0$ à 45° des axes propres d'une fibre biréfringente à maintien de polarisation.

Ceci permet de piéger les impulsions soliton dans le domaine temporel de manière optimale.

Selon une autre caractéristique de l'invention, lors de la phase de transmission montante du procédé de transmission optique selon l'invention, l'étape de transformation par effet non linéaire de piégeage solitonique est réalisée en injectant ledit signal lumineux montant $S'_f$ multiplexé en longueurs d'onde à 45° des axes propres d'une fibre biréfringente à maintien de polarisation.

Selon une autre caractéristique de l'invention, une extraction du signal multiplexé en longueurs d'onde selon un des axes propres de la fibre biréfringente à maintien de polarisation est réalisée.

Du fait de la biréfringence de la fibre, toute impulsion incidente se dédouble selon deux modes propres de propagation, chaque mode se propageant selon l'un des axes propres de la fibre à maintien de polarisation. En plaçant, par exemple, un polariseur orienté selon l'un des axes propres de la fibre, il est possible de récupérer l'un des deux modes propres du spectre et par conséquent, une des composantes fréquentielles générée par l'effet de piégeage solitonique portée par un des axes propres de la fibre.

L'invention vise aussi un système de transmission optique entre un terminal central, une pluralité de terminaux clients via un réseau optique, dans lequel le terminal central est destiné à émettre sur un lien descendant des données descendantes $D_1$, $D_2$ à destination de la pluralité de terminaux clients. Selon un aspect de l'invention, le système de transmission optique est bidirectionnel. Dans ce cas, le terminal central est en outre destiné à recevoir sur un lien montant des données montantes $D'_1$, $D'_2$ en provenance de la pluralité de terminaux clients.

Sur le lien descendant, le système selon l'invention comprend :

- des moyens d'émission d'un signal lumineux descendant S de longueur d'onde unique $\lambda_0$ et portant les données descendantes $D_1$, $D_2$, le signal lumineux descendant S étant doublement multiplexé en temps et en amplitude et constitué d'impulsions de type soliton comportant une pluralité d'amplitudes $A_1$, $A_2$ ;
- des moyens d'émission d'une pluralité de signaux lumineux montants $S'_1$, $S'_2$ vers le terminal central, chaque signal lumineux montant portant respectivement les données montantes $D'_1$, $D'_2$ à une longueur d'onde distincte $\lambda'_1$, $\lambda'_2$ et étant respectivement émis par un terminal client de la pluralité de terminaux clients selon une amplitude $A'_1$, $A'_2$ spécifique et avec un décalage temporel $t'_1$, $t'_2$ prédéterminé;
- des moyens de multiplexage pour multiplexer en longueurs d'onde la pluralité de signaux lumineux montants $S'_1$, $S'_2$ de manière à former un signal lumineux montant $S'_f$ multiplexé en longueurs d'ondes ;
- des moyens de routage du signal lumineux montant $S'_f$ multiplexé en longueurs d'ondes ; et
- au moins un récepteur destiné à obtenir les données montantes $D'_1$, $D'_2$, émises par chaque terminal client de la pluralité de terminaux clients.

Ainsi, l'architecture du système bidirectionnel selon l'invention est très simple à réaliser et est adapté à fonctionner à des débits de transmission très élevés (de 40 à 160 Gbit/s). Sur le lien descendant, le terminal central émet les données descendantes à une longueur d'onde unique.

De plus, le système présente une sécurité optimale et une bonne performance car il permet d'associer une longueur d'onde spécifique à chaque terminal client. De cette manière, contrairement aux PONs classiques, chaque terminal client reçoit, sur une longueur d'onde spécifique, uniquement les données qui lui sont destinées.

Selon un premier mode de réalisation, le système selon l'invention, comprend en outre sur le lien montant:

- des deuxièmes moyens de démultiplexage pour démultiplexer spectralement le signal lumineux montant $S'_f$ multiplexé en longueurs d'ondes en une pluralité de composantes spectrales ; et
- une pluralité de récepteurs en sortie des deuxièmes moyens de démultiplexage, chaque récepteur étant adapté à recevoir des données montantes portées par chaque composante spectrale et émises par un terminal client sur une longueur d'onde respective.

Système un deuxième mode de réalisation, le système selon l'invention comprend en outre sur le lien montant :

- un moyen non linéaire destiné à convertir par un effet de piégeage solitonique, le signal lumineux montant $S'_f$ multiplexé en longueur d'onde en un signal montant de longueur d'onde unique $\lambda'_0$ multiplexé dans le temps portant les données montantes ; et

- des moyens de réception du signal montant de longueur d'onde unique $\lambda'_0$.

Selon une autre caractéristique de l'invention, le système selon l'invention comprend, en outre, un moyen de compression temporelle destiné à comprimer les impulsions de type soliton et situé en amont du moyen non linéaire.

Selon une autre caractéristique de la présente invention, ce moyen de compression temporelle est une fibre de compression non linéaire de type à verre chalcogénure.

Avantageusement, l'utilisation d'un composant tout optique tel qu'une fibre optique en verre chalcogénure permet de comprimer des impulsions soliton dans le domaine temporel, en s'affranchissant d'un composant actif.

De plus, vis-à-vis de la compression temporelle, une fibre de type à verre chalcogénure présente l'avantage d'avoir un indice non linéaire beaucoup plus élevé que celui d'une fibre à verre standard. Ainsi des taux de compression non linéaire des impulsions dans le domaine temporel peuvent être plus facilement atteints avec ce type de fibre qu'avec une fibre standard, limitant ainsi l'encombrement du moyen de compression temporelle ainsi que la puissance requise pour exacerber l'effet de compression.

Selon une autre caractéristique de l'invention, le moyen non linéaire est une fibre biréfringente à maintien de polarisation comportant deux axes propres distincts.

Avantageusement, la longueur de fibre nécessaire pour réaliser le décalage en longueur d'onde par l'effet de piégeage solitonique dans le cas d'une fibre biréfringente à maintien de polarisation est négligeable.

Selon une autre caractéristique de l'invention, le système comprend, en outre, des moyens pour extraire le signal lumineux descendant multiplexé en longueurs d'onde selon un des axes propres de la fibre biréfringente, moyens choisis parmi les éléments suivants :

- un polariseur ;
- un filtre optique passe-bande.

Selon une autre caractéristique de l'invention, le réseau optique est un réseau d'accès optique passif de type PON.

Etant donné que le système décrit selon l'invention ne nécessite aucun composant de type actif, notamment pour la conversion d'un double multiplexage en temps et en amplitude en un multiplexage en longueur d'ondes, ce type de réseau de transmission optique est particulièrement adapté à un réseau optique passif de type PON qui, par définition, n'utilise pas de composants actifs pour permettre l'acheminement des signaux.

L'invention vise également un terminal central de transmission optique comprenant :

- un émetteur destiné à émettre des données descendantes $D_1$, $D_2$ à destination d'une pluralité de terminaux clients, les données descendantes étant portées par un signal lumineux descendant S de longueur d'onde unique $\lambda_0$ comprenant une pluralité d'impulsions de type soliton, le signal lumineux descendant S étant doublement multiplexé en temps et en amplitude et comportant une pluralité d'amplitudes $A_1$, $A_2$ ; et
- au moins un récepteur adapté à recevoir des données montantes $D'_1$, $D'_2$ émises par la pluralité de terminaux clients.

Le terminal selon l'invention est **caractérisé en ce qu'**il comprend en outre :

- un moyen de routage permettant de router les données descendantes et montantes ; et
- un premier convertisseur optique placé entre l'émetteur et le moyen de routage et comprenant un moyen non linéaire pour transformer, par un effet de piégeage solitonique, la longueur d'onde unique $\lambda_0$ du signal lumineux descendant S en une pluralité de longueurs d'onde $\lambda_1$, $\lambda_2$ en fonction de la pluralité d'amplitudes $A_1$, $A_2$, de manière à former un signal lumineux descendant $S_f$ multiplexé en longueurs d'onde.

Avantageusement, l'architecture de l'équipement est très simple, car il suffit d'un seul émetteur pour émettre un signal lumineux à longueur d'onde unique, doublement multiplexé en amplitude et dans le temps et d'un convertisseur optique permettant d'obtenir un signal multiplexé en longueur d'ondes.

Grâce au moyen de routage, un flux de données descendant émis par le terminal central est routé vers la pluralité de terminaux clients, pendant qu'un flux de données montant émis par les terminaux clients est routé vers au moins un récepteur de données du terminal central.. Ce moyen de routage (par exemple, un circulateur optique) présente donc l'avantage de rendre le terminal central « full duplex » dans la mesure où le terminal central peut émettre et recevoir des données simultanément.

De manière avantageuse, cette solution permet de partager la même infrastructure de réseau pour le lien montant que pour le lien descendant, minimisant ainsi la complexité et le coût global du système de transmission.

Selon un premier mode de réalisation, le terminal central selon l'invention comprend un démultiplexeur de réception, une pluralité de récepteurs destinés à recevoir les données montantes $D'_1$, $D'_2$, chacun de ces récepteurs étant relié au démultiplexeur de réception et le moyen de routage étant disposé entre le premier moyen non linéaire et le démultiplexeur de réception.

Selon un deuxième mode de réalisation, le terminal central selon l'invention comprend en outre un récepteur de données et un deuxième convertisseur optique comprenant un moyen non linéaire, le deuxième convertisseur optique étant disposé entre le moyen de routage et le récepteur de données.

Ce deuxième mode de réalisation présente l'avantage de n'utiliser qu'un seul récepteur au niveau du terminal central.

L'invention vise aussi un terminal client de transmission optique, comportant un récepteur/émetteur destiné à recevoir ou émettre des données portées par un signal lumineux ayant une longueur d'onde spécifique depuis ou vers un terminal central comportant les caractéristiques ci-dessus.

Ainsi, le terminal client présente une grande sécurité et une grande simplicité car il n'est pas nécessaire d'avoir un moyen spécifique pour extraire les données qui lui sont destinées.

Brève description des dessins

D'autres particularités et avantages de l'invention ressortiront à la lecture de la description faite, ci-après, à titre indicatif mais non limitatif, en référence aux dessins annexés, sur lesquels :

- la figure 1 illustre un exemple très schématique d'un système de transmission optique entre un terminal central et une pluralité de terminaux clients via un réseau optique et comportant un moyen non linéaire selon l'invention ;
- les figures 2A et 2B illustrent le principe de fonctionnement du moyen non linéaire de la figure 1 ;
- la figure 3 illustre un mode de réalisation d'un convertisseur optique selon l'invention ; et
- les figures 4 et 5 illustrent deux modes de réalisation d'un système de transmission optique selon l'invention.

Description détaillée de modes de réalisation

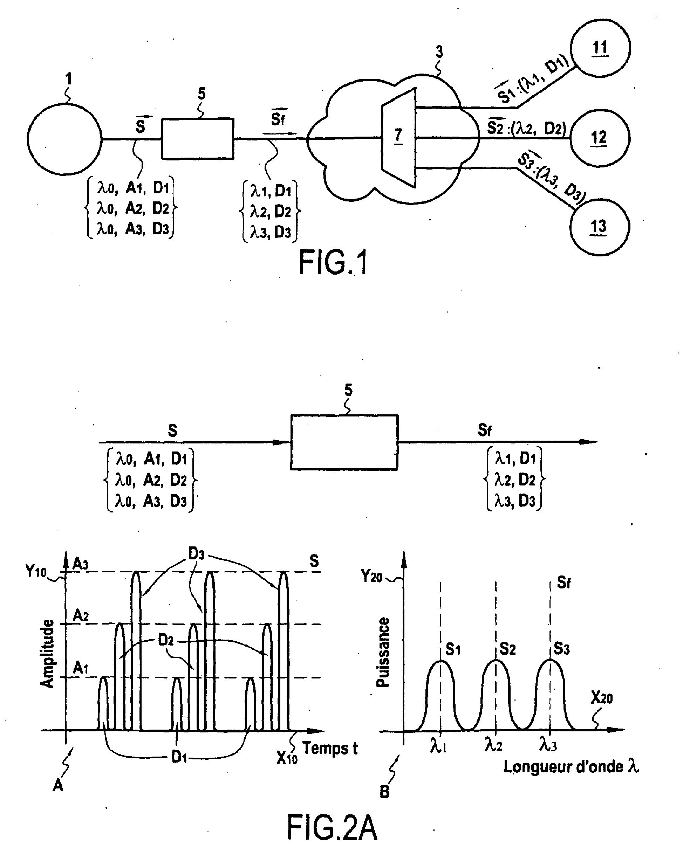

La figure 1 représente, à titre d'exemple et de manière très schématique, un système de transmission optique entre un terminal central 1 et une pluralité de terminaux clients (trois terminaux clients 11, 12, 13 sur la figure 1) via un réseau optique 3, le système comprenant un moyen non linéaire 5 selon l'invention.

Dans cet exemple, le terminal central 1 émet des données descendantes ($D_1$, $D_2$, $D_3$) portées par un signal lumineux descendant S de longueur unique $\lambda_0$, doublement multiplexé en amplitude et dans le temps, comportant une pluralité d'amplitudes ($A_1$, $A_2$, $A_3$).

Le système de transmission comprend un moyen non linéaire 5 et un démultiplexeur 7 (premiers moyens de démultiplexage) en longueurs d'onde, ce démultiplexeur 7 étant compris dans le réseau optique 3.

Le moyen non linéaire 5 permet de convertir le signal lumineux descendant S de longueur d'onde unique $\lambda_0$, doublement multiplexé en amplitude et dans le temps en un signal lumineux descendant $S_f$ multiplexé en longueurs d'onde, comportant une pluralité de composantes spectrales notées $S_1$, $S_2$, $S_3$ selon une pluralité de longueur d'ondes ($\lambda_0 \pm \Delta\lambda_1$, $\lambda_0 \pm \Delta\lambda_2$, $\lambda_0 \pm \Delta\lambda_3$). Par exemple, la composante spectrale $S_1$ de longueur $\lambda_1 = \lambda_0 \pm \Delta\lambda_1$ porte les données $D_1$ destinées au terminal client 11.

Le démultiplexeur 7 en longueurs d'onde situé entre le moyen non linéaire 5 et les terminaux clients 11, 12, 13 permet de démultiplexer en longueurs d'onde le signal $S_f$, en répartissant spatialement la pluralité de composantes spectrales ($S_1$, $S_2$, $S_3$) selon la pluralité de longueurs d'onde, de sorte que chaque terminal client reçoit uniquement les données qui lui sont destinées. Par exemple, le terminal client 12 reçoit les données $D_2$ portée par le signal $S_2$ à la longueur $\lambda_2 = \lambda_0 \pm \Delta\lambda_2$.

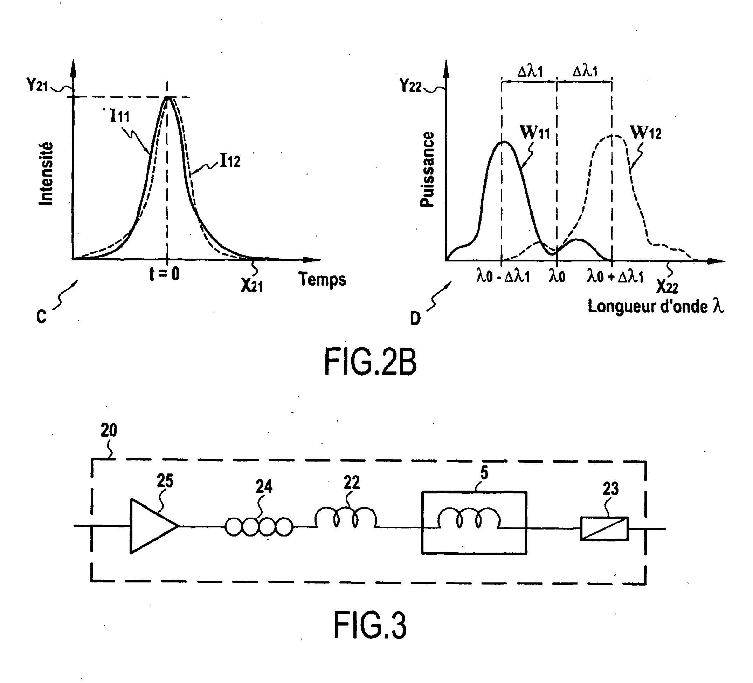

Les figures 2A et 2B illustrent le principe de fonctionnement du moyen non linéaire 5 de la figure 1.

Le moyen non linéaire 5 assure la conversion du signal lumineux S de longueur onde unique $\lambda_0$, doublement multiplexé en amplitude et dans le temps en un signal lumineux $S_f$ multiplexé en longueurs d'onde.

Tel que représenté sur le diagramme A de la figure 2A, le signal lumineux S se compose d'une séquence d'impulsions de type soliton d'amplitude différente (notées $A_1$, $A_2$, $A_3$ en ordonnée Y10) réparties dans le temps (en abscisse X10). Par exemple, les données descendantes $D_3$ destinées à être reçues par le terminal client 13 à la longueur d'onde $\lambda_3 = \lambda_0 \pm \Delta\lambda_3$, sont représentées par les impulsions de même amplitude $A_3$.

Par effet de piégeage solitonique, toutes les impulsions ayant une même amplitude (ou puissance) subissent un même décalage fréquentiel (ou décalage en longueur d'onde) en fonction de la valeur de leur amplitude, de sorte que la longueur d'onde initiale $\lambda_0$ de ces impulsions soit convertie en longueurs d'ondes spécifiques ($\lambda_1 = \lambda_0 \pm \Delta\lambda_1$, $\lambda_2 = \lambda_0 \pm \Delta\lambda_2$, ou $\lambda_3 = \lambda_0 \pm \Delta\lambda_3$ dans cet exemple). Par exemple, l'ensemble des impulsions entrant dans le moyen non linéaire 5 à la longueur d'onde $\lambda_0$ et avec une amplitude $A_2$ sont converties en un ensemble d'impulsions de longueurs d'onde $\lambda_2 = \lambda_0 \pm \Delta\lambda_2$ représentées schématiquement par le signal lumineux $S_2$.

Ainsi, le moyen non linéaire 5 fournit en sortie le signal lumineux $S_f$ multiplexé en longueurs d'ondes dont seulement la moitié du spectre est représentée schématiquement sur le diagramme B de la figure 2A. Dans cet exemple, on a représente le spectre du signal $S_f$ uniquement par trois composantes spectrales $S_1$ , $S_2$ , $S_3$ dont l'amplitude est représentée en ordonnée Y20 en fonction de la longueur d'onde en abscisse X20.

Lors de l'étape de transformation par effet de piégeage solitonique, les impulsions d'amplitude $A_3$ de longueur d'onde $\lambda_0$ portant les données $D_3$ destinées au terminal client 13 sont converties en un signal lumineux $S_3$, de longueur d'onde $\lambda_3 = \lambda_0 \pm \Delta\lambda_3$, ce signal étant destiné uniquement au terminal client 13.

On notera que l'effet de décalage en longueur d'onde produit par le moyen non linéaire 5 est d'autant plus important que la puissance crête des impulsions soliton est élevée. Autrement dit $\Delta\lambda3$ est d'autant plus grand que l'amplitude $A_3$ est élevée.

La figure 2B illustre, de manière très schématique, le phénomène de piégeage solitonique dans une fibre biréfringente à maintien de polarisation 5, lorsqu'une impulsion soliton d'amplitude $A_1$ est injectée dans la fibre à 45° des axes propres de la fibre 5.

En raison de la biréfringence de la fibre 5, cette impulsion incidente se duplique en deux modes de propagation selon les deux axes propres de la fibre biréfringente 5. L'un des modes se propage selon l'axe rapide tandis que l'autre mode se propage selon l'axe lent. Etant donné que la polarisation de l'impulsion incidente est orientée à 45° des axes propres de la fibre, cette impulsion se divise selon deux répliquas d'amplitude égale.

Les diagrammes C et D de la figure 2B représentent respectivement le profil temporel et le spectre de l'impulsion soliton d'amplitude $A_1$ ayant subi l'effet de piégeage solitonique après avoir été injectée dans la fibre 5, cette injection étant réalisée de telle sorte que la polarisation de l'impulsion initiale est orientée à 45° des axes propres de la fibre 5.

Sur ces diagrammes C et D, les profils tracés en pointillés correspondent au mode se propageant selon l'axe rapide de la fibre 5 alors que les profils tracés en continu correspondent au mode des impulsions se propageant selon l'axe lent de la fibre biréfringente à maintien de polarisation 5.

Sous l'effet du piégeage solitonique, les deux modes propres de l'impulsion notés $I_{11}$ et $I_{12}$ sont piégés dans le domaine temporel autour du temps noté t=0 sur l'axe des abscisses $X_{21}$. Ce piégeage est représenté sur le diagramme C de la figure 2B par la quasi-superposition des modes solitoniques $I_{11}$, et $I_{12}$.

Cependant, dans le domaine fréquentiel, l'effet non linéaire de piégeage solitonique décompose le spectre de l'impulsion soliton d'amplitude $A_1$ de longueur d'onde centrale $\lambda_0$ selon deux composantes spectrales notées $W_{11}$ et $W_{12}$, symétriques par rapport à la longueur centrale $\lambda_0$ de l'impulsion incidente, tel que représenté sur le diagramme D de la figure 2B.

Sur ce diagramme, le décalage en longueur d'onde réalisé par l'effet non linéaire de piégeage solitonique est noté $\Delta\lambda_1$ en valeur absolue. Ainsi, la composante spectrale $W_{11}$ est à la longueur d'onde $\lambda_0 - \Delta\lambda_1$, tandis que la composante spectrale $W_{12}$ est à la longueur d'onde $\lambda_0 + \Delta\lambda_1$. Les deux composantes $W_{11}$, $W_{12}$ sont d'autant plus spectralement décalées par rapport à la longueur $\lambda_0$ de l'impulsion initiale, que l'amplitude $A_1$ de l'impulsion initiale est élevée et par conséquent, que l'effet de piégeage solitonique est important.

Ainsi, de manière générale, la fibre biréfringente à maintien de polarisation 5 convertit la longueur d'onde $\lambda_0$ initiale d'une impulsion soliton d'amplitude $A_n$ (où n = 1, 2 ou 3 dans cet exemple) en deux longueurs d'onde distinctes $\lambda_0 + \Delta\lambda_n$ et $\lambda_0 - \Delta\lambda_n$, ces deux longueurs d'ondes étant symétriques par rapport à la longueur d'onde $\lambda_0$, où $\Delta\lambda_n$ est le décalage spectral associé à l'amplitude $A_n$.

La figure 3 illustre un exemple de mode de réalisation du convertisseur 20 selon l'invention.

Dans ce mode de réalisation, le convertisseur 20 comporte une fibre biréfringente à maintien de polarisation 5 (moyen non linéaire 5), une fibre de compression temporelle des impulsions soliton 22 (moyen de compression 22), un polariseur 23 (moyen d'extraction par polarisation 23), un contrôleur de polarisation 24.

Les deux composantes spectrales $W_{11}$ et $W_{12}$ de la figure 2B générées par la fibre biréfringente à maintien de polarisation 5 portent la même information. Par conséquent, à la sortie de ce moyen non linéaire 5, il suffit de récupérer une seule de ces composantes spectrales ($W_{11}$ ou $W_{12}$). A cette fin, on peut, par exemple, placer un polariseur 23 selon l'un des axes propres de la fibre à maintien de polarisation 5. Le même effet peut être atteint en plaçant un filtre optique passe-bande 23' dont la longueur d'onde centrale correspond à la longueur d'onde d'une des composantes $W_{11}$, $W_{12}$.

Le contrôleur de polarisation 24 permet de contrôler l'état de polarisation des impulsions de manière à s'assurer que les impulsions sont bien injectées dans la fibre biréfringente à maintien de polarisation 5 avec une polarisation orientée à 45° des axes propres de la fibre 5.

Dans une variante de réalisation, le convertisseur optique 20 peut également comporter un amplificateur optique 25.

Dans la suite, on donne un exemple numérique pour montrer la capacité de ce convertisseur 20 à démultiplexer en longueurs d'onde le signal lumineux S multiplexé à un débit total de 40 Gbit/s.

A titre d'exemple, considérons donc un flux de données à un débit de 40 Gbit/s, émis au niveau du terminal central 1, avec des impulsions de largeur temporelle $\tau$ égale à 1 ps et de longueur d'onde unique $\lambda_0$ égale à 1550 nm.

Par ailleurs, considérons un moyen de compression 22 constitué par un élément en fibre à verre chalcogénure d'indice non linéaire $n_2$ égal à $2.10^{-18}$ m2/W et de surface effective $A_{eff}$ égale à 50 $\mu$m2. On notera que l'indice non

linéaire $n_2$ de la fibre à verre chalcogénure 22 est beaucoup plus élevé que celui d'une fibre à verre standard. Par ailleurs, on peut choisir pour cette fibre à verre chalcogénure 22 un niveau de dispersion chromatique D égal à 5 ps/nm/km.

Rappelons que dans une fibre optique, une compression non linéaire d'impulsions soliton dans le domaine temporel est possible lorsque la puissance des impulsions soliton introduites dans cette fibre est supérieure à la puissance $P_0$ du soliton fondamental.

Nous allons donc calculer la puissance crête requise d'une impulsion soliton d'ordre N=6 pour obtenir un taux de compression d'environ 25 dans la fibre de compression 22.

En tenant compte de la vitesse c de la lumière dans le vide, la longueur de dispersion $Z_D$ du soliton est donnée par la relation suivante:

$$Z_D = \frac{2\pi c.\tau^2}{1.763^2\lambda^2 D} \qquad (1)$$

Alors, selon les données ci-dessus, la longueur de dispersion $Z_D$ est égale à 50.5 m. Par ailleurs, la période soliton $Z_0$ est donnée par:

$$Z_0 = \frac{\pi Z_D}{2} \qquad (2)$$

soit, selon cet exemple, la période soliton $Z_0$ est égale à 79.3 m. La puissance crête $P_0$ du soliton fondamental vaut alors:

$$P_0 = \frac{0.776\,\lambda^3\,A_{eff}\,D}{\pi^2 c\,n_2\tau^2} \qquad (3)$$

soit, selon cet exemple, la puissance crête $P_0$ vaut 123 mW. La puissance moyenne du train d'impulsions correspondant est alors égale à 4.4 dBm.

En outre, la longueur de dispersion $L_D$ et la longueur non linéaire $L_{NL}$ correspondant à la propagation d'une impulsion de largeur 1 ps et de puissance crête $P_C$ dans la fibre non linéaire à verre chalcogénure 22 (moyen de compression 22) sont données par les relations suivantes:

$$L_D = \frac{2\pi c.\tau^2}{\lambda^2 D} \qquad L_{NL} = \frac{\lambda\,A_{eff}}{2\pi n_2 P_C} \qquad (4)$$

On notera que les impulsions peuvent être considérées comme très proches de solitons d'ordre N si leur puissance crête $P_C$ obéit à la relation suivante :

$$N^2 = \frac{L_D}{L_{NL}} = \frac{4\pi^2 n_2 c\,\tau^2 P_C}{\lambda^3 D\,A_{eff}} \qquad \Rightarrow \qquad P_C = \frac{\lambda^3 D\,A_{eff}\,N^2}{4\pi^2 n_2 c\,\tau^2} \qquad (5)$$

A titre d'exemple, pour un ordre de soliton N=6, la puissance crête $P_C$ correspondante vaut alors 1,41 W.

$$N = 6 \qquad \Rightarrow \qquad P_C = 1.41\,W \qquad (6)$$

En injectant maintenant ces impulsions avec les puissances crêtes calculées ci-dessus dans la fibre de compression 22, le taux de compression $F_C$ de ces impulsions est alors donné par la relation :

$$F_C = 4.1 \, N \qquad (7)$$

La longueur de fibre $L_{opt}$ nécessaire pour obtenir cette compression vaut alors:

$$L_{opt} = \left[ \frac{0.32}{N} + \frac{1.1}{N^2} \right] . Z_0 \qquad (8)$$

soit pour N=6 :

$$N = 6 \quad \Rightarrow \quad F_C = 24.6 \quad et \quad L_{opt} = 6.65 \, m \quad (9)$$

Le facteur de compression est donc d'environ 25 (la largeur des impulsions après compression est égale à 40 fs) et la longueur de fibre à verre chalcogénure 22 nécessaire pour obtenir cette compression est égale à 6.65 m.

Après cette phase de compression des impulsions dans le domaine temporel, intervient alors, le décalage spectral des impulsions par l'effet de piégeage solitonique.

Cet effet non linéaire se manifeste, par exemple, dans une fibre à maintien de polarisation 5, avec des impulsions soliton dont la polarisation est orientée à 45° des axes propres de cette fibre 5.

On notera que l'effet de piégeage solitonique peut être réalisé lorsque les deux conditions suivantes sont remplies.

Selon une première condition, la fibre à maintien de polarisation 5 (moyen non linéaire 5) doit être utilisée en régime non linéaire, c'est-à-dire que les impulsions incidentes doivent avoir les caractéristiques physiques (amplitude et largeur à mi-hauteur) des solitons de préférence d'ordre 1 adaptées à ladite fibre à maintien de polarisation 5. Notons que l'effet de piégeage solitonique agit au mieux sur les solitons d'ordre 1.

Selon une seconde condition, le "walk-off" des impulsions soliton (autrement dit la durée de collision des deux impulsions solitons de polarisation orthogonale soumis à la dispersion modale de polarisation de la fibre à maintien de polarisation 5) se propageant dans cette fibre à maintien de polarisation 5 doit être inférieur ou égal, après une période soliton, à la largeur des impulsions avant injection dans la fibre à maintien de polarisation 5 (Cette largeur est ici $\tau_0 = 40$ fs).

La définition du "walk-off" est donnée par M.N. Islam *et al.* selon la formule suivante :

$$Walk - Off = \Delta\beta' . Z_0 \leq \tau_0 \quad (10)$$

$\Delta\beta'$ étant la dispersion modale de polarisation de la fibre à maintien de polarisation 5.

Considérons maintenant un moyen non linéaire 5 constitué d'une fibre à maintien de polarisation en verre chalcogénure d'indice non-linéaire $n_2$ égal à $2.10^{-18}$ m²/W et de surface effective $A_{eff}$ égale à 50 $\mu$m², de dispersion chromatique toujours égale à 5 ps/nm/km, la période soliton $Z_0$ vaut maintenant :

$$Z_0 = \frac{\pi^2 c . \tau_0^2}{1.763^2 \lambda^2 D} = 12.7 \, cm \qquad (11)$$

La puissance crête $P_0$ du soliton fondamental vaut alors :

$$P_0 = \frac{0.776 \, \lambda^3 \, A_{eff} \, D}{\pi^2 c \, n_2 \tau_0^2} = 76 \, W \qquad (12)$$

soit une puissance moyenne du train d'impulsions correspondant égale à 18.4 dBm. La relation (10) nous indique que la dispersion modale de polarisation devra être inférieure ou égale à 315 ps/km.

Le paramètre de "soliton trapping" $\delta$, tel que défini par M.N. Islam, C.D. Poole, J.P. Gordon dans un document intitulé "Soliton Trapping in biréfringent optical fibers", Optics Letters, Vol. 14, No. 18, pp. 1011-1013, September 1989, est donné par la formule suivante :

$$\delta = \frac{\pi \, \Delta n \, \tau_0}{1.763 \, \lambda^2 \, D} \qquad (13)$$

$\Delta n$ étant la variation d'indice entre les axes propres de biréfringence de la fibre à maintien de polarisation. Etant donné que la dispersion modale de polarisation $\Delta\beta'$ est reliée à $\Delta n$ par:

$$\Delta\beta' = \frac{\Delta n}{c} \qquad (14)$$

l'équation (13) devient alors

$$\delta = \frac{\pi c \, \Delta\beta' \, \tau_0}{1.763 \, \lambda^2 \, D} \qquad (15)$$

D'après C.R. Menyuck selon l'article intitulé "Stability of solitons in birefringent optical fibers.I: Equal propagation amplitudes", Optics Letters, Vol.12, No.8, pp. 614-616, August 1987, la biréfringence de la fibre à maintien de polarisation sera compensée par l'effet Kerr pour un soliton d'ordre 1 si le paramètre $\delta$ est égal à 0.5, soit:

$$\Delta\beta' = \frac{1.763 \, \lambda^2 \, D \, \delta}{\pi c \, \tau_0} = 281 \, ps \, / \, km \qquad (16)$$

Avec cette valeur de $\Delta\beta'$, le "walk-off" est égale à 35.7 fs. Cette valeur étant inférieure à la largeur des impulsions initiales (40 fs), les conditions d'existence de l'effet de piégeage solitonique sont bien vérifiées. La biréfringence de la fibre est alors égale à

$$\Delta n = c \, \Delta\beta' = 8.4 \cdot 10^{-5} \qquad (17)$$

soit une longueur de battement $L_B$ de 18 mm environ (en comparaison aux 3 mm de longueur de battement des fibres très fortement biréfringentes).

En résumé, en injectant à 45° des axes propres d'une fibre à maintien de polarisation à verre chalcogénure

biréfringente de $\Delta n = 8.4.10^{-5}$, de dispersion chromatique D = 5 ps/nm/km, d'indice non-linéaire $n_2 = 2.10^{-18}$ m2/W, de surface effective $A_{eff}$ = 50 $\mu$m2, un soliton d'ordre 1 de puissance moyenne égale à 18.4 dBm, on réunit toutes les conditions d'excitation du "soliton trapping".

Comme l'expose G.P. Agrawal dans "Nonlinear Fiber Optics", p.164-165, Academic Press, 1989, on fait se propager les impulsions sur une distance de 1.3 m, ce qui correspond environ à 10.$Z_0$. Le décalage en longueur d'onde $\Delta\lambda$ généré entre les deux répliques $W_{12}$ et $W_{11}$ du spectre de l'impulsion de la figure 2B est alors donné par

$$\Delta\lambda = \frac{\Delta\beta'}{D} = 56\ nm \qquad (18)$$

Ainsi, pour des impulsions compressées ayant une largeur de 40 fs (mais émise au niveau du terminal central 1 avec une largeur de 1 ps), un décalage en longueur d'onde de 56 nm est réalisé entre les deux répliques $W_{12}$ et $W_{11}$ du spectre de l'impulsion.

Au bout de 8 m environ de fibre au total (dans lesquels sont inclus les 6.65 m nécessaires à la compression des impulsions), un décalage de 28 nm est obtenu par rapport à la longueur unique $\lambda_0$ des impulsions incidentes.

A titre d'exemple, dans le cas où le système de transmission optique comporte 40 terminaux clients (ou abonnés) avec un débit par terminal client égal à 1 Gbit/s, alors en considérant 40 valeurs de puissance crête de trame judicieusement réparties jusqu'à 76 W (18.4 dBm), il est possible de répartir 40 longueurs d'onde descendantes (à destination des 40 terminaux clients) sur environ 30 nm de bande, soit environ une longueur d'onde tous les 100 GHz. La limite en puissance est donc donnée par la puissance du soliton fondamental ou d'ordre 1.

La puissance d'émission de chaque terminal client est choisie de telle sorte que, la longueur d'onde des impulsions émises par chaque terminal client soit convertie, par effet de piégeage solitonique sur le lien montant, en une longueur cible unique. On notera que l'amplitude des impulsions émises par chaque terminal client est préalablement ajustée lors d'une étape initiale de configuration du réseau optique.

Par ailleurs, la diaphonie (ou « crosstalk » en anglais) entre différents canaux WDM (ou différentes longueurs d'onde) générés ne sera pas notable en raison de la compression du spectre qui sera générée dans la fibre standard reliant le terminal central 1 aux terminaux clients. En effet, une propagation en régime non solitonique d'impulsions ultracourtes (ici 40 fs) dans une fibre standard (dispersion D = 17 ps/nm/km, longueur de dispersion du soliton fondamental $Z_D$ = 2.4 cm, puissance moyenne du soliton fondamental $P_0$ = 42.4 dBm) sur quelques mètres va avoir pour effet d'élargir les impulsions dans le domaine temporel (en déstabilisant la propagation "soliton"), ce qui se traduit dans le domaine fréquentiel par une compression de spectre, de sorte qu'au niveau du démultiplexeur, aucune diaphonie notable ne sera observable.

En revanche, un module de compensation de la dispersion chromatique doit être mis en place en amont du démultiplexeur 7 de manière à compenser la dispersion chromatique accumulée sur le trajet effectué entre le central 1 et les terminaux clients.

Il n'est néanmoins pas nécessaire de retrouver la largeur des impulsions initiales (i.e. 40 fs) précisément puisque le débit reçu par le terminal client est seulement de 1 Gbit/s (ce qui correspond à un temps bit égal à 1 ns). Ramener les impulsions dans leur temps bit avec une largeur à mi-hauteur inférieure à la moitié du temps bit (c'est-à-dire 500 ps) est amplement suffisant. La tolérance sur la longueur de fibre compensant la fibre standard SSMF (Standard Single Mode Fibre) est d'environ 1 km. Ainsi, si la distance central-abonné est de 20 km, compenser 19 km seulement de SSMF suffit à ramener l'impulsion dans le temps bit avec une largeur suffisamment petite pour que le photodétecteur parvienne à la résoudre.

L'exemple numérique ci-dessus montre donc l'efficacité de l'effet de piégeage solitonique à démultiplexer spectralement un flux de données à 40 Gbit/s.

Ainsi l'invention concilie des avantages des deux types d'architecture de réseau PON. Autrement dit, au niveau du terminal central 1, une longueur d'onde unique $\lambda_0$ est envoyée, tandis qu'un démultiplexeur optique 7 à faible perte est implémenté dans le réseau 3 de sorte qu'à chaque terminal client (ou abonné) 11, 12 ou 13 est associée une longueur d'onde $\lambda_1$, $\lambda_2$ ou $\lambda_3$ qui lui est bien spécifique et sur laquelle sont portées les données $D_1$, $D_2$ ou $D_3$ qui lui sont destinées.

De manière avantageuse, la transformation basée sur l'effet de piégeage solitonique selon l'invention permet de se limiter à une longueur de fibre de quelques mètres dans le cas d'une architecture de type PON classique comprenant 40 abonnés. En effet, selon l'exemple numérique présenté ci-dessus, 8 m environ de fibre au total suffisent (dans lesquels sont inclus les 6.65 m nécessaires à la compression d'impulsion). Ceci présente l'avantage de produire des convertisseurs entièrement passifs à encombrement réduit, faciles à fabriquer et à coût réduit.

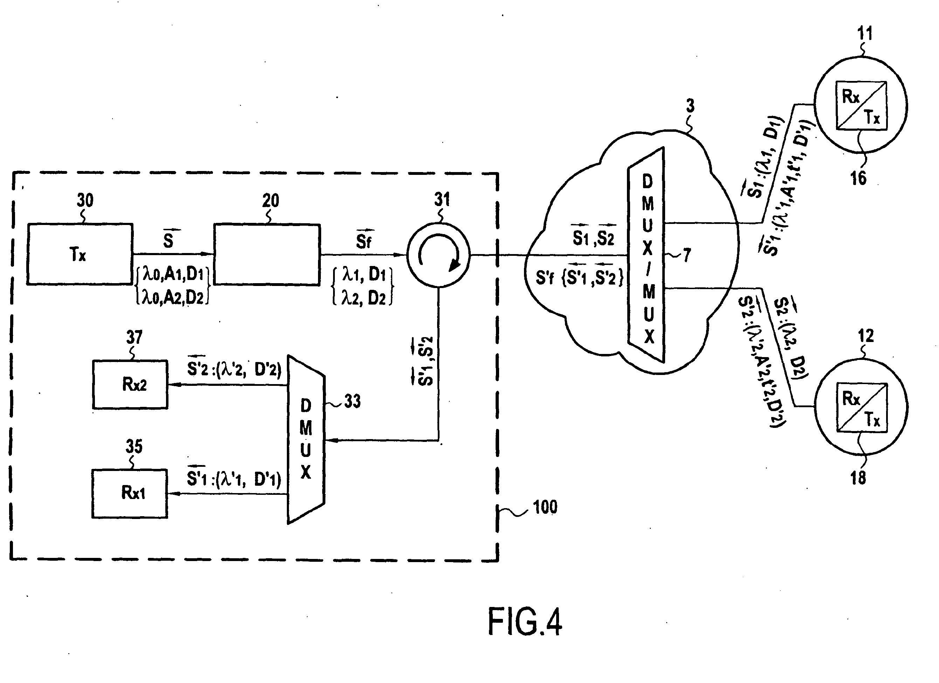

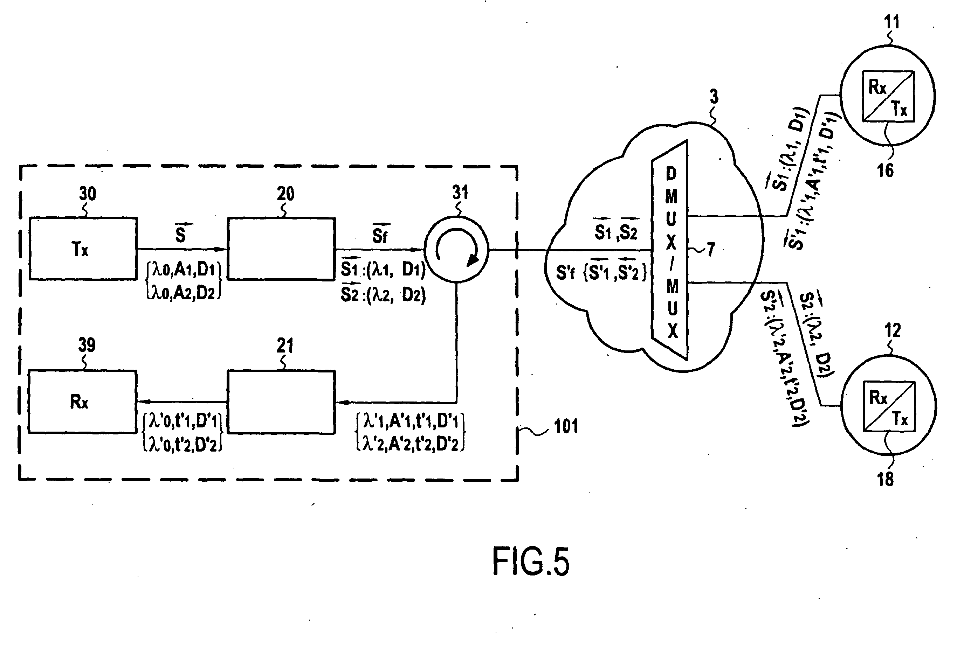

Les figures 4 et 5 montrent deux modes de réalisation du terminal central 101, 100 selon l'invention, dans un système de transmission optique bidirectionnel, comprenant à titre d'exemple deux terminaux clients 11 et 12. Dans ces deux modes de réalisation, le terminal central 100, 101 est lui-même bi-directionnel (ou « full-duplex » en anglais) dans le sens où il peut gérer simultanément des flux de données descendant et montant.

Selon ces deux modes de réalisation, le terminal central 100, 101 de transmission optique comporte un émetteur 30 destiné à envoyer sur le lien descendant des données descendantes $D_1$, $D_2$ à une pluralité des terminaux clients 11, 12 lors d'une phase de transmission descendante. Le terminal central 100, 101 comprend en outre au moins un récepteur pour recevoir des données montantes $D'_1$, $D'_2$ émises par la pluralité des terminaux clients 11,12 sur le lien montant.

Par la suite, on désignera par « lien descendant », le lien de communication du système selon lequel les données descendantes $D_1$, $D_2$ sont transmises du terminal central 100, 101 vers la pluralité de terminaux client 11, 12, lors d'une phase de transmission descendante.

Inversement, on désignera par « lien montant », le lien de communication du système selon lequel les données montantes $D'_1$, $D'_2$ sont transmises de la pluralité de terminaux clients 11, 12 vers le terminal central 100, 101, lors d'une phase de transmission montante.

Phase de transmission descendante

Lors d'une étape d'émission, le terminal central 100, 101, émet à destination d'une pluralité de terminaux client 11, 12 les données descendantes $D_1$, $D_2$ portées par un signal lumineux S, de longueur d'onde unique $\lambda_0$, multiplexé en amplitude et dans le temps. Le signal lumineux S est constitué d'une pluralité d'impulsions soliton comportant une pluralité d'amplitudes. Dans le cas des des exemples des figures 4 et 5, le signal S est constitué d'une première série d'impulsions d'amplitude $A_1$ (données $D_1$) et une deuxième série d'impulsions d'amplitude $A_2$ (données $D_2$).

Lors d'une étape de transformation, le convertisseur optique 20 convertit la longueur d'onde unique $\lambda_0$ du signal lumineux S descendant en deux longueurs d'onde distinctes $\lambda_1$ et $\lambda_2$ en fonction des amplitudes $A_1$ et $A_2$ de manière à former un signal lumineux descendant $S_f$ multiplexé en longueurs d'onde portant les données descendantes $D_1$ et $D_2$, selon les longueurs d'onde respectives $\lambda_1$ et $\lambda_2$.

Lors d'une étape de routage, le signal lumineux descendant $S_f$ multiplexé en longueurs d'ondes est routé vers la pluralité de terminaux clients 11, 12. Pour cela, des moyens de routage constitués par un circulateur optique WDM 31 est placé en coupure de flux entre le convertisseur optique 20 et le réseau optique 3.

Sur le lien descendant, on désigne par :

- $S_1$ la composante spectrale du signal $S_f$ multiplexé en longueurs d'onde portant les données descendantes $D_1$ à la longueur d'onde $\lambda_1$ destinées au terminal client 11 ; et
- $S_2$ la composante spectrale du signal $S_f$ multiplexé en longueurs d'onde portant les données descendantes $D_2$ à la longueur d'onde $\lambda_2$ destinées au terminal client 12.

Lors d'une étape de démultiplexage en longueurs d'onde, le signal lumineux descendant $S_f$ multiplexé en longueurs d'onde est spectralement démultiplexé, de sorte que chaque terminal client 11, 12 puisse recevoir les données qui lui sont destinées ($D_1$, $D_2$ respectivement) selon une longueur d'onde spécifique ($\lambda_1$, $\lambda_2$ respectivement). Pour cela, des moyens de démultiplexage optique constitués par un démultiplexeur optique WDM 7 sont disposés dans le réseau optique 3, entre le circulateur WDM 31 et la pluralité de terminaux clients 11, 12.

Les terminaux client 11 et 12 de transmission optique, comportent chacun un module de réception ou récepteur notés respectivement 16 et 18 destinés à recevoir les données portées par les composantes spectrales $S_1$, $S_2$ du signal lumineux descendant $S_f$. Ainsi, les données descendantes $D_1$ (respectivement $D_2$) portées par la composante spectrale $S_1$ (respectivement $S_2$) à la longueur d'onde $\lambda_1$ (respectivement $\lambda_2$) sont acheminées au terminal client 11 (respectivement 12) par un lien optique et démodulées par le récepteur 16 (respectivement 18) du terminal client 11 (respectivement 12).

Phase de transmission montante

Sur le lien montant (c'est-à-dire des terminaux clients 11 et 12 au terminal central 100 ou 101), on désigne par $S'_1$ (respectivement $S'_2$) le signal lumineux émis par l'émetteur 16 (respectivement 18) du terminal client 11 (respectivement 12) portant les données montantes $D'_1$ (respectivement $D'_2$) à la longueur d'onde $\lambda'_1$ (respectivement $\lambda'_1$) destinées au terminal central 100 ou 101.

Lors d'une étape d'émission sur le lien montant, chaque terminal client 11, 12 émet les données montantes $D'_1$, $D'_2$ vers le terminal central 100, 101. Le signal lumineux montants $S'_1$ (respectivement $S'_2$) est émis à une amplitude $A'_1$ (respectivement $A'_2$) spécifique et avec un décalage temporel $t'_1$ (respectivement $t'_2$) prédéterminé.

Lors d'une étape de multiplexage en longueurs d'onde, les signaux lumineux montants $S'_1$ et $S'_2$ sont multiplexés en longueurs d'onde par un multiplexeur WDM 7 (moyens de multiplexage), de manière à former un signal lumineux montant $S'_f$ multiplexé en longueurs d'ondes. On notera que ce multiplexeur WDM 7 et le démultiplexeur WDM 7 utilisé pour le lien descendant sont constitués par un unique composant jouant à la fois le rôle de multiplexeur et de démultiplexeur.

Lors d'une étape de routage, le signal lumineux montant $S'_f$ multiplexé en longueurs d'ondes est routé par le circulateur optique 31 vers au moins un récepteur destiné à obtenir les données montantes $D'_1$ et $D'_2$ émises respectivement par les terminaux clients 11 et 12.

Premier mode de réalisation

La figure 4 illustre un premier mode de réalisation d'un système de transmission optique bidirectionnel comprenant un lien montant et un lien descendant mettant en oeuvre les phases de transmission montante et descendante décrites ci-dessus et dans lequel le terminal central 100 comprend un démultiplexeur de réception 33 (deuxième moyen de démultiplexage), deux récepteurs de données 37 et 35 reliés au démultiplexeur de réception 33, et le circulateur 31 qui est disposé entre le convertisseur 20 et le démultiplexeur de réception 33.

Lors d'une étape de démultiplexage de la phase de transmission montante, le signal lumineux montant $S'_f$ multiplexé en longueurs d'ondes est spectralement démultiplexé par le démultiplexeur de réception 33, de manière à distribuer les composantes spectrales S'1, S'2 respectivement vers un premier 35 et un second 37 récepteur de données.

Lors d'une étape de réception, les données montantes D'1 et D'2 portées respectivement par les signaux lumineux montants S'1 et S'2 sont respectivement reçus par le premier 35 et le second 37 récepteur de données selon les longueurs d'ondes respectives.

Ainsi, les données $D'_2$ et $D'_1$ sont récupérées Au niveau du terminal central 100, après un démultiplexage en longueurs d'onde des signaux $S'_1$ et $S'_2$ réalisé par le démultiplexeur de réception 33.

On notera que la conversion du signal lumineux S doublement multiplexé en amplitude et dans le temps en un signal lumineux $S_f$ multiplexé en longueurs d'onde, de l'exemple de la figure 4, concerne les signaux lumineux $S_1$, $S_2$ sur le lien descendant.

Toutefois, afin de minimiser le nombre de récepteurs de données au niveau du terminal central 100 sur le lien montant, le signal lumineux montant $S'_f$ multiplexé en longueurs d'ondes peut être transformé en un signal OTDM (« Optical Time Division Multiplexing ») à l'aide d'un convertisseur optique supplémentaire 21 basé sur l'effet de piégeage solitonique, comme illustré sur la figure 5 dans un deuxième mode de réalisation.

Deuxième mode de réalisation

Le terminal central 101 selon le deuxième mode de réalisation de la figure 5 comprend les éléments suivants :

- l'émetteur 30, le circulateur optique 31,
- un premier convertisseur optique 20 selon l'invention, placé entre l'émetteur 30 et le circulateur optique 31,
- un récepteur de données 39 connecté au deuxième convertisseur 21, et
- un deuxième convertisseur optique 21 selon l'invention, placé entre le récepteur de données 39 et le circulateur optique 31.

Après avoir été routé par le circulateur optique 31, le signal lumineux montant $S'_f$ multiplexé en longueurs d'onde est injecté dans le deuxième convertisseur optique 21, qui le convertit lors d'une étape de transformation par un effet non linéaire de piégeage solitonique en un signal montant de longueur d'onde unique $\lambda'_0$ multiplexé dans le temps et portant les données montantes $D'_1$, $D'_2$.

De même que pour la phase de transmission descendante, le moyen non linéaire optique du second convertisseur 21 est constitué par une fibre biréfringente à maintien de polarisation 5. Dans ce cas, l'étape de transformation de la phase de transmission montante est réalisée en injectant le signal lumineux montant $S'_f$ multiplexé en longueurs d'onde à 45° des axes propres d'une fibre biréfringente à maintien de polarisation 5.

Ce deuxième convertisseur 21 a pour effet de recaler les deux canaux portés par les longueurs d'ondes $\lambda'_1$ et $\lambda'_2$ sur une longueur d'onde unique montante $\lambda'_0$, dont la valeur est prise, par exemple, légèrement supérieure à celle de la longueur d'onde $\lambda_0$ utilisée dans le sens descendant afin d'éviter des interférences entre le lien montant et le lien descendant.

Naturellement, au niveau de chaque terminal client 11, 12, il est nécessaire d'émettre des trames de puissances telles que les longueurs d'onde $\lambda'_1$ et $\lambda'_2$ puissent se recaler de manière satisfaisante sur la longueur d'onde unique montante $\lambda'_0$.

Lors d'une étape de réception, le signal montant de longueur d'onde unique $\lambda'_0$ fourni en sortie du deuxième convertisseur optique 21 est démodulé par un récepteur unique 39 de manière à récupérer les données montantes $D'_1$, $D'_2$ sur deux canaux distincts.

L'avantage de ce deuxième mode de réalisation est de n'avoir qu'un seul récepteur 39 au niveau du terminal central 101, à condition d'effectuer une synchronisation fine à l'émission des signaux montants $S'_1$, $S'_2$ pour que ces signaux s'intercalent correctement dans le domaine temporel. Autrement dit, à l'émission, chaque signal $S'_1$, $S'_2$ doit

être émis avec un décalage temporel t'$_1$ et t'$_2$ tel qu'après transformation par effet de piégeage solitonique, le signal obtenu en sortie du deuxième convertisseur optique 21 soit un signal multiplexé dans le temps (signal OTDM).

**Revendications**

1. Procédé de transmission optique entre un terminal central (1) et une pluralité de terminaux clients (11-13) via un réseau optique (3), comprenant une phase de transmission descendante destinée à transmettre des données descendantes (D$_1$-D$_3$), ledit procédé étant **caractérisé en ce qu'**il comprend les étapes suivantes :

   - émission par ledit terminal central (1) d'un signal lumineux descendant (S) de longueur d'onde unique ($\lambda_0$) doublement multiplexé en amplitude et dans le temps et portant les données descendantes (D$_1$-D$_3$) destinées à être reçues par ladite pluralité de terminaux clients (11-13), ledit signal lumineux descendant (S) de longueur d'onde unique ($\lambda_0$) étant constitué d'impulsions de type soliton comportant une pluralité d'amplitudes (A$_1$-A$_3$);
   - transformation par un effet non linéaire de piégeage solitonique de ladite longueur d'onde unique ($\lambda_0$) dudit signal lumineux (S) descendant en une pluralité de longueurs d'onde ($\lambda_1$-$\lambda_3$) en fonction de ladite pluralité d'amplitudes (A$_1$-A$_3$) de manière à former un signal lumineux descendant (S$_f$) multiplexé en longueurs d'onde ;
   - routage du signal lumineux descendant (S$_f$) multiplexé en longueurs d'ondes vers ladite pluralité de terminaux clients (11-13) ; et
   - démultiplexage en longueurs d'onde dudit signal lumineux descendant (S$_1$) multiplexé en longueurs d'onde, de sorte que chaque terminal client (11-13) reçoit les données qui lui sont destinées (D$_1$-D$_3$) selon une longueur d'onde spécifique ($\lambda_1$-$\lambda_3$).

2. Procédé de transmission optique entre un terminal central (100; 101) et une pluralité de terminaux clients (11, 12) via un réseau optique (3), comprenant une phase de transmission descendante destinée à transmettre des données descendantes (D$_1$, D$_2$) et une phase de transmission montante destinée à transmettre des données montantes (D'$_1$, D'$_2$), ledit procédé étant **caractérisé en ce que** ladite phase de transmission descendante comprend les étapes suivantes :

   - émission par ledit terminal central (100; 101) d'un signal lumineux descendant (S) de longueur d'onde unique ($\lambda_0$) doublement multiplexé en amplitude et dans le temps et portant les données descendantes (D$_1$, D$_2$) destinées à être reçues par ladite pluralité de terminaux clients (11, 12), ledit signal lumineux descendant (S) de longueur d'onde unique ($\lambda_0$) étant constitué d'impulsions de type soliton comportant une pluralité d'amplitudes (A$_1$, A$_2$) ;
   - transformation par ledit terminal central (100; 101) par un effet non linéaire de piégeage solitonique de ladite longueur d'onde unique ($\lambda_0$) dudit signal lumineux (S) descendant en une pluralité de longueurs d'onde ($\lambda_1$, $\lambda_2$) en fonction de ladite pluralité d'amplitudes (A$_1$, A$_2$) de manière à former un signal lumineux descendant (S$_f$) multiplexé en longueurs d'onde ;
   - routage du signal lumineux descendant (S$_f$) multiplexé en longueurs d'ondes vers ladite pluralité de terminaux clients (11, 12) ; et
   - démultiplexage en longueurs d'onde dudit signal lumineux descendant (S$_f$) multiplexé en longueurs d'onde, de sorte que chaque terminal client (11, 12) reçoit les données qui lui sont destinées (D$_1$, D$_2$) selon une longueur d'onde spécifique ($\lambda_1$, $\lambda_2$).

3. Procédé de transmission optique selon la revendication 2, dans lequel ladite phase de transmission montante comprend les étapes suivantes:

   - émission d'une pluralité de signaux lumineux montants (S'$_1$, S'$_2$) vers ledit terminal central (100 ; 101), chaque signal lumineux montant portant respectivement les données montantes (D'$_1$, D'$_2$) à une longueur d'onde distincte ($\lambda$'$_1$, $\lambda$'$_2$) et étant respectivement émis par un terminal client de ladite pluralité de terminaux clients (11, 12) selon une amplitude (A'$_1$, A'$_2$) spécifique et avec un décalage temporel (t'$_1$, t'$_2$) prédéterminé;
   - multiplexage en longueurs d'onde de ladite pluralité des signaux lumineux montants (S'$_1$, S'$_2$) de manière à former un signal lumineux montant (S'$_1$) multiplexé en longueurs d'ondes ; et
   - routage dudit signal lumineux montant (S'$_f$) multiplexé en longueurs d'ondes vers au moins un récepteur destiné à obtenir les données (D'$_1$, D'$_2$) émises par chaque terminal client de ladite pluralité de terminaux clients (11, 12).

4. Procédé de transmission optique selon la revendication 3, **caractérisé en ce que** ladite phase de transmission montante comprend en outre :

- une étape de démultiplexage en longueurs d'ondes, lors de laquelle le signal lumineux montant $(S'_t)$ multiplexé en longueurs d'ondes est spectralement démultiplexé en une pluralité de composantes spectrales ; et
- une étape de réception des données montantes par une pluralité de récepteurs, lors de laquelle chacune desdites composantes spectrales portant les données montantes émises par un terminal client sur une longueur d'onde respective est reçue par un récepteur de ladite pluralité de récepteurs.

**5.** Procédé de transmission optique selon la revendication 3, **caractérisé en ce que** ladite phase de transmission montante comprend en outre :

- une étape de transformation, lors de laquelle ledit signal lumineux montant $(S'_f)$ multiplexé en longueur d'onde est converti par un effet non linéaire de piégeage solitonique en un signal montant de longueur d'onde unique $(\lambda'_0)$ multiplexé dans le temps portant les données montantes ; et
- une étape de réception du signal montant de longueur d'onde unique $(\lambda'_0)$ par un récepteur unique (39).

**6.** Procédé de transmission optique selon l'une des revendications 1 à 5, **caractérisé en ce qu'**il comprend en outre préalablement à ladite étape de transformation, une étape de compression temporelle desdites impulsions de type soliton.

**7.** Système de transmission optique comprenant un terminal central (1) et une pluralité de terminaux clients (11-13) via un réseau optique (3), ledit terminal central (1) étant destiné à émettre sur un lien descendant des données descendantes $(D_1-D_3)$ à destination de ladite pluralité de terminaux clients (11-13) , ledit système étant **caractérisé en ce qu'**il comprend sur le lien descendant :

- des moyens (1) d'émission d'un signal lumineux descendant (S) de longueur d'onde unique $(\lambda_0)$ et portant lesdites données descendantes $(D_1-D_3)$, ledit signal lumineux descendant (S) étant doublement multiplexé en temps et en amplitude et constitué d'impulsions de type soliton comportant une pluralité d'amplitudes $(A_1-A_3)$ ;
- un moyen non linéaire (5) pour transformer par un effet de piégeage solitonique ladite longueur d'onde unique $(\lambda_0)$ dudit signal lumineux descendant (S) en une pluralité de longueurs d'onde $(\lambda_1-\lambda_3)$ en fonction de ladite pluralité d'amplitudes $(A_1-A_3)$, de manière à former un signal lumineux descendant $(S_f)$ multiplexé en longueurs d'onde ;
- un moyen de routage pour router le signal lumineux descendant $(S_f)$ multiplexé en longueurs d'ondes vers ladite pluralité de terminaux clients (11-13); et
- des moyens de démultiplexage (7) pour démultiplexer spectralement ledit signal lumineux descendant $(S_f)$, de sorte que chaque terminal client (11-13) reçoit les données descendantes $(D_1-D_3)$ qui lui sont destinées selon une longueur d'onde spécifique $(\lambda_1-\lambda_3)$.

**8.** Système de transmission optique comprenant un terminal central (100 ; 101) et une pluralité de terminaux clients (11, 12) via un réseau optique (3), ledit terminal central (100 ; 101) étant destiné à émettre sur un lien descendant des données descendantes $(D_1, D_2)$ à destination de ladite pluralité de terminaux clients (11, 12) et à recevoir sur un lien montant des données montantes $(D'_1, D'_2)$ en provenance de ladite pluralité de terminaux clients (11, 12), ledit système étant **caractérisé en ce que** le terminal central (100; 101) comprend:

- des moyens (30) d'émission d'un signal lumineux descendant (S) de longueur d'onde unique $(\lambda_0)$ et portant lesdites données descendantes $(D_1, D_2)$, ledit signal lumineux descendant (S) étant doublement multiplexé en temps et en amplitude et constitué d'impulsions de type soliton comportant une pluralité d'amplitudes $(A_1, A_2)$;
- un moyen non linéaire (20) pour transformer par un effet de piégeage solitonique, ladite longueur d'onde unique $(\lambda_0)$ dudit signal lumineux descendant (S) en une pluralité de longueurs d'onde $(\lambda_1, \lambda_2)$ en fonction de ladite pluralité d'amplitudes $(A_1, A_2)$, de manière à former un signal lumineux descendant $(S_f)$ multiplexé en longueurs d'onde ;

le système comprenant par ailleurs:

- un moyen de routage pour router le signal lumineux descendant $(S_f)$ multiplexé en longueurs d'ondes vers ladite pluralité de terminaux clients (11, 12) ; et
- des premiers moyens de démultiplexage (7) pour démultiplexer spectralement ledit signal lumineux descendant $(S_f)$, de sorte que chaque terminal client (11, 12) reçoit les données descendantes $(D_1, D_2)$ qui lui sont destinées selon une longueur d'onde spécifique ($\lambda_1$, $\lambda_2$).

9. Système de transmission optique selon la revendication 8, **caractérisé en ce que** ledit système comprend en outre sur le lien montant:

    - des moyens (11; 12) d'émission d'une pluralité de signaux lumineux montants (S'$_1$, S'$_2$) vers ledit terminal central (100 ; 101), chaque signal lumineux montant portant respectivement les données montantes (D'$_1$, D'$_2$) à une longueur d'onde distincte ($\lambda'_1$, $\lambda'_2$) et étant respectivement émis par un terminal client de ladite pluralité de terminaux clients (11, 12) selon une amplitude (A'$_1$, A'$_2$) spécifique et avec un décalage temporel (t'$_1$, t'$_2$) prédéterminé;
    - des moyens de multiplexage (7) pour multiplexer en longueurs d'onde ladite pluralité des signaux lumineux montants (S'$_1$, S'$_2$) de manière à former un signal lumineux montant (S'$_f$) multiplexé en longueurs d'ondes ;
    - des moyens de routage dudit signal lumineux montant (S'$_f$) multiplexé en longueurs d'ondes ; et
    - au moins un récepteur (35, 37; 39) destiné à obtenir les données (D'$_1$, D'$_2$) émises par chaque terminal client de ladite pluralité de terminaux clients (11, 12).

10. Système selon la revendication 8, **caractérisé en ce qu'**il comprend en outre sur le lien montant:

    - des deuxièmes moyens (33) de démultiplexage pour démultiplexer spectralement le signal lumineux montant (S'$_f$) multiplexé en longueurs d'ondes en une pluralité de composantes spectrales ; et
    - une pluratité de récepteurs (35, 37) en sortie desdits deuxièmes moyens de démultiplexage, chaque récepteur étant adapté à recevoir des données montantes portées par chaque composante spectrale et émises par un terminal client sur une longueur d'onde respective.

11. Système selon la revendication 8, **caractérisé en ce qu'**il comprend en outre sur le lien montant :

    - un moyen non linéaire (5) destiné à convertir par un effet de piégeage solitonique, le signal lumineux montant (S'$_f$) multiplexé en longueur d'onde en un signal montant de longueur d'onde unique ($\lambda'_0$) multiplexé dans le temps portant les données montantes ; et
    - des moyens de réception (39) dudit signal montant de longueur d'onde unique ($\lambda'_0$).

12. Système selon la revendication 8, **caractérisé en ce qu'**il comprend, en outre, un moyen de compression temporelle (22) destiné à comprimer lesdites impulsions de type soliton et situé en amont dudit moyen non linéaire (5).

13. Système selon la revendication 8, **caractérisé en ce que** ledit réseau optique (3) est un réseau d'accès optique passif de type PON.

14. Terminal central (100; 101) de transmission optique **caractérisé par**:

    - un émetteur (30) destiné à émettre des données descendantes (D$_1$, D$_2$) à destination d'une pluralité de terminaux clients (11, 12), lesdites données descendantes étant portées par un signal lumineux descendant (S) de longueur d'onde unique ($\lambda_0$) comprenant une pluralité d'impulsions de type soliton, ledit signal lumineux descendant (S) étant doublement multiplexé en temps et en amplitude et comportant une pluralité d'amplitudes (A$_1$, A$_2$), et
    - au moins un récepteur (35, 37; 39) adapté à recevoir des données montantes (D'$_1$, D'$_2$) émises par ladite pluralité de terminaux clients (11, 12) ;

    ledit terminal central (100; 101) comprenant en outre :

    - un moyen de routage (31) permettant de router les données descendantes et montantes ; et
    - un premier convertisseur optique (20) disposé entre l'émetteur (30) et le moyen de routage (31), ledit premier convertisseur optique (20) comprenant un moyen non linéaire (5) pour transformer par un effet de piégeage solitonique ladite longueur d'onde unique ($\lambda_0$) dudit signal lumineux descendant (S) en une pluralité de longueurs d'onde ($\lambda_1$, $\lambda_2$) en fonction de ladite pluralité d'amplitudes (A$_1$, A$_2$), de manière à former un signal lumineux descendant (S$_f$) multiplexé en longueurs d'onde.

15. Terminal (101) selon la revendication 14, **caractérisé en ce qu'**il comprend en outre un récepteur (39) de données et un deuxième convertisseur optique (21) comprenant un moyen non linéaire (5), le deuxième (21) convertisseur

**EP 1 969 748 B1**

optique étant disposé entre ledit moyen de routage (31) et ledit récepteur (39) de données.

**Claims**

1. Method of optical transmission between a central terminal (1) and a plurality of client terminals (11-13) via an optical network (3), comprising a phase of downgoing transmission intended to transmit downgoing data (D1-D3), the said method being **characterized in that** it comprises the following steps:

   - emission by the said central terminal (1) of a downgoing light signal (S) of single wavelength (λ0), doubly multiplexed in amplitude and in time and carrying the downgoing data (D1-D3) intended to be received by the said plurality of client terminals (11-13), the said downgoing light signal (S) of single wavelength (λ0) being made up of pulses of soliton type comprising a plurality of amplitudes (A1-A3);
   - transformation by a non-linear soliton trapping effect of the said single wavelength (λ0) of the said downgoing light signal (S) into a plurality of wavelengths (λ1-λ3) as a function of the said plurality of amplitudes (A1-A3) so as to form a wavelength-multiplexed downgoing light signal (Sf);
   - routing of the wavelength-multiplexed downgoing light signal (Sf) to the said plurality of client terminals (11-13); and
   - wavelength-demultiplexing of the said wavelength-multiplexed downgoing light signal (Sf), so that each client terminal (11-13) receives the data which are intended for it (D1-D3) according to a specific wavelength (A1-A3).

2. Method of optical transmission between a central terminal (100; 101) and a plurality of client terminals (11, 12) via an optical network (3), comprising a phase of downgoing transmission intended to transmit downgoing data (D1, D2) and a phase of upgoing transmission intended to transmit upgoing data (D'1, D'2), the said method being **characterized in that** the said phase of downgoing transmission comprises the following steps:

   - emission by the said central terminal (100; 101) of a downgoing light signal (S) of single wavelength (λ0), doubly multiplexed in amplitude and in time and carrying the downgoing data (D1, D2) intended to be received by the said plurality of client terminals (11, 12), the said downgoing light signal (S) of single wavelength (λ0) being made up of pulses of soliton type comprising a plurality of amplitudes (A1, A2);
   - transformation by the said central terminal (100; 101) by a non-linear soliton trapping effect of the said single wavelength (λ0) of the said downgoing light signal (S) into a plurality of wavelengths (λ1, λ2) as a function of the said plurality of amplitudes (A1, A2) so as to form a wavelength-multiplexed downgoing light signal (Sf);
   - routing of the wavelength-multiplexed downgoing light signal (Sf) to the said plurality of client terminals (11, 12); and
   - wavelength-demultiplexing of the said wavelength-multiplexed downgoing light signal (Sf), so that each client terminal (11, 12) receives the data which are intended for it (D1, D2) according to a specific wavelength (λ1, λ2).

3. Method of optical transmission according to Claim 2, in which the said phase of upgoing transmission comprises the following steps:

   - emission of a plurality of upgoing light signals (S'1, S'2) to the said central terminal (100; 101), each upgoing light signal carrying respectively the upgoing data (D'1, D'2) at a distinct wavelength (λ'1, λ'2) and being respectively emitted by a client terminal of the said plurality of client terminals (11, 12) according to a specific amplitude (A'1, A'2) and with a predetermined temporal shift (t'1, t'2);
   - wavelength-multiplexing of the said plurality of the upgoing light signals (S'1, S'2) so as to form a wavelength-multiplexed upgoing light signal (S'f); and
   - routing of the said wavelength-multiplexed upgoing light signal (S'f) to at least one receiver intended to obtain the data (D'1, D'2) emitted by each client terminal of the said plurality of client terminals (11, 12).

4. Method of optical transmission according to Claim 3, **characterized in that** the said phase of upgoing transmission furthermore comprises:

   - a wavelength-demultiplexing step, during which the wavelength-multiplexed upgoing light signal (S'f) is spectrally demultiplexed into a plurality of spectral components; and
   - a step of receiving the upgoing data with a plurality of receivers, during which each of the said spectral components carrying the upgoing data emitted by a client terminal on a respective wavelength is received by a receiver of the said plurality of receivers.

17

5. Method of optical transmission according to Claim 3, **characterized in that** the said phase of upgoing transmission furthermore comprises:

- a transformation step, during which the said wavelength-multiplexed upgoing light signal (S'f) is converted by a non-linear soliton trapping effect into a time-multiplexed upgoing signal of single wavelength ($\lambda$'0) carrying the upgoing data; and
- a step of receiving the upgoing signal of single wavelength ($\lambda$'0) with a single receiver (39).

6. Method of optical transmission according to one of Claims 1 to 5, **characterized in that** it furthermore comprises, prior to the said transformation step, a step of temporal compression of the said pulses of soliton type.

7. System for optical transmission comprising a central terminal (1) and a plurality of client terminals (11-13) via an optical network (3), the said central terminal (1) being intended to emit on a downlink downgoing data (D1-D3) destined for the said plurality of client terminals (11-13), the said system being **characterized in that** it comprises on the downlink:

- means (1) for emitting a downgoing light signal (S) of single wavelength ($\lambda$0) carrying the said downgoing data (D1-D3), the said downgoing light signal (S) being doubly multiplexed in time and in amplitude and made up of pulses of soliton type comprising a plurality of amplitudes (A1-A3);
- a non-linear means (5) for transforming, by a soliton trapping effect, the said single wavelength ($\lambda$0) of the said downgoing light signal (S) into a plurality of wavelengths ($\lambda$1-$\lambda$3) as a function of the said plurality of amplitudes (A1-A3), so as to form a wavelength-multiplexed downgoing light signal (Sf);
- a routing means for routing the wavelength-multiplexed downgoing light signal (Sf) to the said plurality of client terminals (11-13); and
- demultiplexing means (7) for spectrally demultiplexing the said downgoing light signal (Sf), so that each client terminal (11-13) receives the downgoing data (D1-D3) which are intended for it according to a specific wavelength ($\lambda$1-$\lambda$3).

8. System for optical transmission comprising a central terminal (100; 101) and a plurality of client terminals (11, 12) via an optical network (3), the said central terminal (100; 101) being intended to emit on a downlink downgoing data (D1, D2) destined for the said plurality of client terminals (11, 12) and to receive on an uplink upgoing data (D'1, D'2) originating from the said plurality of client terminals (11, 12), the said system being **characterized in that** the central terminal (100; 101) comprises:

- means (30) for emitting a downgoing light signal (S) of single wavelength ($\lambda$0) carrying the said downgoing data (D1, D2), the said downgoing light signal (S) being doubly multiplexed in time and in amplitude and made up of pulses of soliton type comprising a plurality of amplitudes (A1, A2);
- a non-linear means (20) for transforming, by a soliton trapping effect, the said single wavelength ($\lambda$0) of the said downgoing light signal (S) into a plurality of wavelengths ($\lambda$1, $\lambda$2) as a function of the said plurality of amplitudes (A1, A2), so as to form a wavelength-multiplexed downgoing light signal (Sf);

the system moreover comprising:

- a routing means for routing the wavelength-multiplexed downgoing light signal (Sf) to the said plurality of client terminals (11, 12); and
- first demultiplexing means (7) for spectrally demultiplexing the said downgoing light signal (Sf), so that each client terminal (11, 12) receives the downgoing data (D1, D2) which are intended for it according to a specific wavelength ($\lambda$1, $\lambda$2).

9. System for optical transmission according to Claim 8,
**characterized in that** the said system furthermore comprises on the uplink:

- means (11; 12) for emitting a plurality of upgoing light signals (S'1, S'2) to the said central terminal (100; 101), each upgoing light signal carrying respectively the upgoing data (D'1, D'2) at a distinct wavelength ($\lambda$'1, $\lambda$'2) and being respectively emitted by a client terminal of the said plurality of client terminals (11, 12) according to a specific amplitude (A'1, A'2) and with a predetermined temporal shift (t'1, t'2);
- multiplexing means (7) for wavelength-multiplexing the said plurality of the upgoing light signals (S'1, S'2) so as to form a wavelength-multiplexed upgoing light signal (S'f);

- means for routing the said wavelength-multiplexed upgoing light signal (S'f); and
- at least one receiver (35, 37; 39) intended to obtain the data (D'1, D'2) emitted by each client terminal of the said plurality of client terminals (11, 12).

**10.** System according to Claim 8, **characterized in that** it furthermore comprises on the uplink:

- second demultiplexing means (33) for spectrally demultiplexing the wavelength-multiplexed upgoing light signal (S'f) into a plurality of spectral components; and
- a plurality of receivers (35, 37) at the output of the said second demultiplexing means, each receiver being suitable for receiving upgoing data carried by each spectral component and emitted by a client terminal on a respective wavelength.

**11.** System according to Claim 8, **characterized in that** it furthermore comprises on the uplink:

- a non-linear means (5) intended to convert, by a soliton trapping effect, the wavelength-multiplexed upgoing light signal (S'f) into a time-multiplexed upgoing signal of single wavelength ($\lambda$'0) carrying the upgoing data; and
- means (39) for receiving the said upgoing signal of single wavelength ($\lambda$'0).

**12.** System according to Claim 8, **characterized in that** it comprises, furthermore, a temporal compression means (22) intended to compress the said pulses of soliton type and situated upstream of the said non-linear means (5).

**13.** System according to Claim 8, **characterized in that** the said optical network (3) is a passive optical access network of PON type.

**14.** Central terminal (100; 101) for optical transmission, **characterized by**:

- an emitter (30) intended to emit downgoing data (D1, D2) destined for a plurality of client terminals (11, 12), the said downgoing data being carried by a downgoing light signal (S) of single wavelength ($\lambda$0) comprising a plurality of pulses of soliton type, the said downgoing light signal (S) being doubly multiplexed in time and in amplitude and comprising a plurality of amplitudes (A1, A2), and
- at least one receiver (35, 37; 39) suitable for receiving upgoing data (D'1, D'2) emitted by the said plurality of client terminals (11, 12);

the said central terminal (100; 101) furthermore comprising:

- a routing means (31) making it possible to route the downgoing and upgoing data; and
- a first optical converter (20) disposed between the emitter (30) and the routing means (31), the said first optical converter (20) comprising a non-linear means (5) for transforming by a soliton trapping effect the said single wavelength ($\lambda$0) of the said downgoing light signal (S) into a plurality of wavelengths ($\lambda$1, $\lambda$2) as a function of the said plurality of amplitudes (A1, A2), so as to form a wavelength-multiplexed downgoing light signal (Sf).

**15.** Terminal (101) according to Claim 14, **characterized in that** it furthermore comprises a data receiver (39) and a second optical converter (21) comprising a non-linear means (5), the second optical converter (21) being disposed between the said routing means (31) and the said data receiver (39).

**Patentansprüche**

**1.** Verfahren zur optischen Übertragung zwischen einem zentralen Endgerät (1) und mehreren Client-Endgeräten (11-13) über ein optisches Netz (3), das eine Phase der Downstream-Übertragung enthält, die dazu bestimmt ist, Downstream-Daten ($D_1$-$D_3$) zu übertragen, wobei das Verfahren **dadurch gekennzeichnet ist, dass** es die folgenden Schritte enthält:

- Senden, durch das zentrale Endgerät (1), eines Downstream-Lichtsignals (S) mit einer einzigen Wellenlänge ($\lambda_0$), das doppelt amplituden- und zeitmultiplexiert ist und die Downstream-Daten ($D_1$-$D_3$) trägt, die dazu bestimmt sind, von den mehreren Client-Endgeräten (11-13) empfangen zu werden, wobei das Downstream-Lichtsignal (S) mit einer einzigen Wellenlänge ($\lambda_0$) aus Impulsen vom Typ Soliton besteht, die mehrere Amplituden ($A_1$-$A_3$) aufweisen;

- Umwandlung, durch einen nichtlinearen Effekt des Solitonen-Einfangs, der einzigen Wellenlänge ($\lambda_0$) des Downstream-Lichtsignals (S) in mehrere Wellenlängen ($\lambda_1$-$\lambda_3$) in Abhängigkeit von den mehreren Amplituden ($A_1$-$A_3$), um ein wellenlängenmultiplexiertes Downstream-Lichtsignal ($S_f$) zu formen;
- Routen des wellenlängenmultiplexierten Downstream-Lichtsignals ($S_f$) zu den mehreren Client-Endgeräten (11-13); und
- Wellenlängendemultiplexieren des wellenlängenmultiplexierten Downstream-Lichtsignals ($S_f$), so dass jedes Client-Endgerät (11-13) die für es bestimmten Daten ($D_1$-$D_3$) gemäß einer spezifischen Wellenlänge ($\lambda_1$-$\lambda_3$) empfängt.

2. Verfahren zur optischen Übertragung zwischen einem zentralen Endgerät (100; 101) und mehreren Client-Endgeräten (11, 12) über ein optisches Netz (3), das eine Phase der Downstream-Übertragung, die dazu bestimmt ist, Downstream-Daten ($D_1$, $D_2$) zu übertragen, und eine Phase der Upstream-Übertragung enthält, die dazu bestimmt ist, Upstream-Daten ($D'_1$, $D'_2$) zu übertragen, wobei das Verfahren **dadurch gekennzeichnet ist, dass** die Phase der Downstream-Übertragung die folgenden Schritte enthält:

- Senden, durch das zentrale Endgerät (100; 101), eines Downstream-Lichtsignals (S) mit einer einzigen Wellenlänge ($\lambda_0$), das doppelt amplituden- und zeitmultiplexiert ist und die Downstream-Daten ($D_1$, $D_2$) trägt, die dazu bestimmt sind, von den mehreren Client-Endgeräten (11, 12) empfangen zu werden, wobei das Downstream-Lichtsignal (S) mit einer einzigen Wellenlänge ($\lambda_0$) aus Impulsen vom Typ Soliton besteht, die mehrere Amplituden ($A_1$, $A_2$) aufweisen;
- Umwandlung durch das zentrale Endgerät (100; 101), durch einen nichtlinearen Effekt des Solitonen-Einfangs, der einzigen Wellenlänge ($\lambda_0$) des Downstream-Lichtsignals (S) in mehrere Wellenlängen ($\lambda_1$, $\lambda_2$) in Abhängigkeit von den mehreren Amplituden ($A_1$, $A_2$), um ein wellenlängenmultiplexiertes Downstream-Lichtsignal ($S_f$) zu formen;
- Routen des wellenlängenmultiplexierten Downstream-Lichtsignals ($S_f$) zu den mehreren Client-Endgeräten (11, 12); und
- Wellenlängendemultiplexieren des wellenlängenmultiplexierten Downstream-Lichtsignals ($S_f$), so dass jedes Client-Endgerät (11, 12) die für es bestimmten Daten ($D_1$, $D_2$) gemäß einer spezifischen Wellenlänge ($\lambda_1$, $\lambda_2$) empfängt.

3. Verfahren zur optischen Übertragung nach Anspruch 2, bei dem die Phase der Upstream-Übertragung die folgenden Schritte enthält:

- Senden von mehreren Upstream-Lichtsignalen ($S'_1$, $S'_2$) zum zentralen Endgerät (100; 101), wobei jedes Upstream-Lichtsignal jeweils die Upstream-Daten ($D'_1$, $D'_2$) auf einer unterschiedlichen Wellenlänge ($\lambda'_1$, $\lambda'_2$) trägt und jeweils von einem Client-Endgerät der mehreren Client-Endgeräte (11, 12) gemäß einer spezifischen Amplitude ($A'_1$, $A'_2$) und mit einer vorbestimmten Zeitverschiebung ($t'_1$, $t'_2$) gesendet wird;
- Wellenlängenmultiplexieren der mehreren Upstream-Lichtsignale ($S'_1$, $S'_2$), um ein wellenlängenmultiplexiertes Upstream-Lichtsignal ($S'_f$) zu formen; und
- Routen des wellenlängenmultiplexierten Upstream-Lichtsignals ($S'_f$) zu mindestens einem Empfänger, der dazu bestimmt ist, die von jedem Client-Endgerät der mehreren Client-Endgeräte (11, 12) gesendeten Daten ($D'_1$, $D'_2$) zu erhalten.

4. Verfahren zur optischen Übertragung nach Anspruch 3, **dadurch gekennzeichnet, dass** die Phase der Upstream-Übertragung außerdem enthält:

- einen Schritt des Wellenlängendemultiplexierens, in dem das wellenlängenmultiplexierte Upstream-Lichtsignal ($S'_f$) spektral in mehrere Spektralkomponenten demultiplexiert wird; und
- einen Schritt des Empfangs der Upstream-Daten durch mehrere Empfänger, in dem jede der Spektralkomponenten, die die von einem Client-Endgerät auf einer jeweiligen Wellenlänge gesendeten Upstream-Daten tragen, von einem Empfänger der mehreren Empfänger empfangen wird.

5. Verfahren zur optischen Übertragung nach Anspruch 3, **dadurch gekennzeichnet, dass** die Phase der Upstream-Übertragung außerdem enthält:

- einen Schritt der Umwandlung, in dem das wellenlängenmultiplexierte Upstream-Lichtsignal ($S'_f$) durch einen nichtlinearen Effekt des Solitonen-Einfangs in ein zeitmultiplexiertes Upstream-Signal mit einer einzigen Wellenlänge ($\lambda'_0$) umgewandelt wird, das die Upstream-Daten trägt; und

- einen Schritt des Empfangs des Upstream-Signals mit einer einzigen Wellenlänge ($\lambda'_0$) durch einen einzigen Empfänger (39).

6. Verfahren zur optischen Übertragung nach einem der Ansprüche 1 bis 5, **dadurch gekennzeichnet, dass** es außerdem vor dem Umwandlungsschritt einen Schritt der zeitlichen Komprimierung der Impulse vom Typ Soliton enthält.

7. System zur optischen Übertragung über ein optisches Netz (3), welches System ein zentrales Endgerät (1) und mehrere Client-Endgeräte (11-13) umfasst, wobei das zentrale Endgerät (1) dazu bestimmt ist, auf einem Downlink Downstream-Daten ($D_1$-$D_3$) an die mehreren Client-Endgeräte (11-13) zu senden, wobei das System **dadurch gekennzeichnet ist, dass** es auf dem Downlink enthält:

- Einrichtungen (1) zum Senden eines Downstream-Lichtsignals (S) mit einer einzigen Wellenlänge ($\lambda_0$) und das die Downstream-Daten ($D_1$-$D_3$) trägt, wobei das Downstream-Lichtsignal (S) doppelt zeit- und amplitudenmultiplexiert ist und aus Impulsen vom Typ Soliton besteht, die mehrere Amplituden ($A_1$-$A_3$) aufweisen;
- eine nichtlineare Einrichtung (5), um durch einen Effekt des Solitonen-Einfangs die einzige Wellenlänge ($\lambda_0$) des Downstream-Lichtsignals (S) in Abhängigkeit von den mehreren Amplituden ($A_1$-$A_3$) in mehrere Wellen-längen ($\lambda_1$-$\lambda_3$) umzuwandeln, um ein wellenlängenmultiplexiertes Downstream-Lichtsignal ($S_f$) zu formen;
- eine Routing-Einrichtung, um das wellenlängenmultiplexierte Downstream-Lichtsignal ($S_f$) zu den mehreren Client-Endgeräten (11-13) zu routen; und
- Demultiplexiereinrichtungen (7), um das Downstream-Lichtsignal ($S_f$) spektral zu demultiplexieren, damit jedes Client-Endgerät (11-13) die für es bestimmten Downstream-Daten ($D_1$-$D_3$) gemäß einer spezifischen Wellen-länge ($\lambda_1$-$\lambda_3$) empfängt.

8. System zur optischen Übertragung über ein optisches Netz (3), welches System ein zentrales Endgerät (100; 101) und mehrere Client-Endgeräte (11, 12) umfasst, wobei das zentrale Endgerät (100; 101) dazu bestimmt ist, auf einem Downlink Downstream-Daten ($D_1$, $D_2$) an die mehreren Client-Endgeräte (11, 12) zu senden und auf einem Uplink von den mehreren Client-Endgeräten (11, 12) kommende Upstream-Daten ($D'_1$, $D'_2$) zu empfangen, wobei das System **dadurch gekennzeichnet ist, dass** das zentrale Endgerät (100; 101) enthält:

- Einrichtungen (30) zum Senden eines Downstream-Lichtsignals (S) mit einer einzigen Wellenlänge ($\lambda_0$) und das die Downstream-Daten ($D_1$, $D_2$) trägt, wobei das Downstream-Lichtsignal (S) doppelt zeit- und amplitudenmultiplexiert ist und aus Impulsen vom Typ Soliton besteht, die mehrere Amplituden ($A_1$, $A_2$) aufweisen;
- eine nichtlineare Einrichtung (20), um durch einen Effekt des Solitonen-Einfangs die einzige Wellenlänge ($\lambda_0$) des Downstream-Lichtsignals (S) in Abhängigkeit von den mehreren Amplituden ($A_1$, $A_2$) in mehrere Wellen-längen ($\lambda_1$, $\lambda_2$) umzuwandeln, um ein wellenlängenmultiplexiertes Downstream-Lichtsignal ($S_f$) zu formen;

wobei das System außerdem enthält:

- eine Routing-Einrichtung, um das wellenlängenmultiplexierte Downstream-Lichtsignal ($S_f$) zu den mehreren Client-Endgeräten (11, 12) zu routen; und
- erste Demultiplexiereinrichtungen (7), um das Downstream-Lichtsignal ($S_f$) spektral zu demultiplexieren, damit jedes Client-Endgerät (11, 12) die für es bestimmten Downstream-Daten ($D_1$, $D_2$) gemäß einer spezifischen Wellenlänge ($\lambda_1$, $\lambda_2$) empfängt.

9. System nach Anspruch 8, **dadurch gekennzeichnet, dass** das System außerdem auf dem Uplink enthält:

- Einrichtungen (11; 12) zum Senden mehrerer Upstream-Lichtsignale ($S'_1$, $S'_2$) an das zentrale Endgerät (100; 101), wobei jedes Upstream-Lichtsignal jeweils die Upstream-Daten ($D'_1$, $D'_2$) mit einer unterschiedlichen Wel-lenlänge ($\lambda'_1$, $\lambda'_2$) trägt und jeweils von einem Client-Endgerät der mehreren Client-Endgeräte (11, 12) gemäß einer spezifischen Amplitude ($A'_1$, $A'_2$) und mit einer vorbestimmten Zeitverzögerung ($t'_1$, $t'_2$) gesendet wird;
- Multiplexeinrichtungen (7), um die mehreren Upstream-Lichtsignale ($S'_1$, $S'_2$) zu wellenlängenmultiplexieren, um ein wellenlängenmultiplexiertes Upstream-Lichtsignal ($S'_f$) zu formen;
- Routing-Einrichtungen des wellenlängenmultiplexierten Upstream-Lichtsignals ($S'_f$); und
- mindestens einen Empfänger (35, 37; 39), der dazu bestimmt ist, die von jedem Client-Endgerät der mehreren Client-Endgeräte (11, 12) gesendeten Daten ($D'_1$, $D'_2$) zu erhalten.

10. System nach Anspruch 8, **dadurch gekennzeichnet, dass** es außerdem auf dem Uplink enthält:

- zweite Demultiplexiereinrichtungen (33), um das wellenlängenmultiplexierte Upstream-Lichtsignal (S'$_f$) in mehrere Spektralkomponenten spektral zu demultiplexieren; und
- mehrere Empfänger (35, 37) am Ausgang der zweiten Demultiplexiereinrichtungen, wobei jeder Empfänger geeignet ist, um von jeder Spektralkomponente getragene und von einem Client-Endgerät auf einer jeweiligen Wellenlänge gesendete Upstream-Daten zu empfangen.

**11.** System nach Anspruch 8, **dadurch gekennzeichnet, dass** es außerdem auf dem Uplink enthält:

- eine nichtlineare Einrichtung (5), die dazu bestimmt ist, durch einen Effekt des Solitonen-Einfangs das wellenlängenmultiplexierte Upstream-Lichtsignal (S'$_f$) in ein zeitmultiplexiertes Upstream-Signal mit einer einzigen Wellenlänge ($\lambda$'$_0$) umzuwandeln, das die Upstream-Daten trägt; und
- Empfangseinrichtungen (39) des Upstream-Signals mit einer einzigen Wellenlänge ($\lambda$'$_0$).

**12.** System nach Anspruch 8, **dadurch gekennzeichnet, dass** es außerdem eine Einrichtung zur zeitlichen Komprimierung (22) enthält, die dazu bestimmt ist, die Impulse vom Typ Soliton zu komprimieren und sich vor der nichtlinearen Einrichtung (5) befindet.

**13.** System nach Anspruch 8, **dadurch gekennzeichnet, dass** das optische Netz (3) ein passives optisches Zugangsnetz vom Typ PON ist.

**14.** Zentrales Endgerät (100; 101) zur optischen Übertragung, **gekennzeichnet durch**:

- einen Sender (30), der dazu bestimmt ist, Downstream-Daten (D$_1$, D$_2$) an mehrere Client-Endgeräte (11, 12) zu senden, wobei die Downstream-Daten von einem Downstream-Lichtsignal (S) mit einer einzigen Wellenlänge ($\lambda_0$) getragen werden, das mehrere Impulse vom Typ Soliton enthält, wobei das Downstream-Lichtsignal (S) doppelt zeit- und amplitudenmultiplexiert ist und mehrere Amplituden (A$_1$, A$_2$) aufweist, und
- mindestens einen Empfänger (35, 37; 39), der geeignet ist, um Upstream-Daten (D'$_1$, D'$_2$) zu empfangen, die von den mehreren Client-Endgeräten (11, 12) gesendet werden;

wobei das zentrale Endgerät (100; 101) außerdem enthält:

- eine Routing-Einrichtung (31), die es ermöglicht, die Downstream- und Upstream-Daten zu routen; und
- einen ersten optischen Wandler (20), der zwischen dem Sender (30) und der Routing-Einrichtung (31) angeordnet ist, wobei der erste optische Wandler (20) eine nichtlineare Einrichtung (5) enthält, um **durch** einen Effekt des Solitonen-Einfangs die einzige Wellenlänge ($\lambda_0$) des Downstream-Lichtsignals (S) in Abhängigkeit von den mehreren Amplituden (A$_1$, A$_2$) in mehrere Wellenlängen ($\lambda_1$, $\lambda_2$) umzuwandeln, um ein wellenlängenmultiplexiertes Downstream-Lichtsignal (S$_f$) zu formen.

**15.** Endgerät (101) nach Anspruch 14, **dadurch gekennzeichnet, dass** es außerdem einen Datenempfänger (39) und einen zweiten optischen Wandler (21) enthält, der eine nichtlineare Einrichtung (5) enthält, wobei der zweite optische Wandler (21) zwischen der Routing-Einrichtung (31) und dem Datenempfänger (39) angeordnet ist.

FIG.1

FIG.2A

FIG.2B

FIG.3

FIG.4

EP 1 969 748 B1

FIG.5

EP 1 969 748 B1

## RÉFÉRENCES CITÉES DANS LA DESCRIPTION

**Documents brevets cités dans la description**

- US 2003231885 A

- WO 03090392 A

**Littérature non-brevet citée dans la description**

- **M.N. Islam ; C.D. Poole ; J.P. Gordon.** Soliton Trapping in biréfringent optical fibers. *Optics Letters,* Septembre 1989, vol. 14 (18), 1011-1013

- **C.R. Menyuck.** Stability of solitons in birefringent optical fibers.I: Equal propagation amplitudes. *Optics Letters,* Août 1987, vol. 12 (8), 614-616
- **G.P. Agrawal.** Nonlinear Fiber Optics. Academic Press, 1989, 164-165